# EUROPÄISCHE PATENTSCHRIFT

(11) **EP 3 774 465 B1**
(45) Veröffentlichungstag und Bekanntmachung des Hinweises auf die Patenterteilung: **06.07.2022**
(21) Anmeldenummer: 19715844.7
(22) Anmeldetag: 25.03.2019
(51) Int. Cl.: B60T 13/68

(54) **ELEKTROPNEUMATISCHES BREMSSTEUERMODUL FÜR NUTZFAHRZEUGE MIT REDUNDANZ-DRUCKANSCHLUSS**
ELECTRO-PNEUMATIC BRAKE CONTROL MODULE FOR TRUCKS PROVIDED WITH REDUNDANT PRESSURE LINE
MODULE DE CONTRÔLE ÉLECTRO-PNEUMATIQUE DE FREIN POURVUE D'UNE LIGNE REDONDANTE D'ALIMENTATION EN PRESSION

(30) Priorität: 05.04.2018 DE 102018108091
(43) Veröffentlichungstag der Anmeldung: 17.02.2021
(73) Patentinhaber: ZF CV Systems Europe BV, 1170 Brussels (BE)
(72) Erfinder: VAN THIEL, Julian, 30938 Großburgwedel (DE)
(74) Vertreter: Rabe, Dirk-Heinrich
(86) Internationale Anmeldenummer: PCT/EP2019/057359
(87) Internationale Veröffentlichungsnummer: WO 2019/192863

(56) Entgegenhaltungen:
- EP-A1- 0 547 407
- EP-A1- 1 780 087
- WO-A1-01/66397
- DE-A1-102006 041 011
- DE-A1-102014 006 614
- DE-A1-102015 110 386

## Beschreibung

Die Erfindung betrifft ein elektropneumatisches Bremssteuermodul für Nutzfahrzeuge mit einem Vorratsanschluss zum Anschließen eines Druckluftvorrats, einem ersten Achskanalanschluss, einer pneumatisch gesteuerten Einlass-Auslass-Ventileinheit zum Aussteuern eines ersten Bremsdrucks an dem ersten Achskanalanschluss, und einer elektropneumatischen Vorsteuereinheit zum Aussteuern wenigstens eines ersten Steuerdrucks an der Einlass-Auslass-Ventileinheit. Die Erfindung betrifft ferner ein Fahrzeug mit einem derartigen elektropneumatischen Bremssteuermodul.

Elektropneumatische Bremssteuermodule der vorstehend genannten Art werden in pneumatischen Bremsanlagen für Kraftfahrzeuge, insbesondere Nutzfahrzeuge, eingesetzt. Pneumatische Bremsanlagen für Kraftfahrzeuge weisen üblicherweise pro Rad des Kraftfahrzeugs eine pneumatisch betätigbare Radbremse auf, wobei das pneumatische Betriebsmittel, insbesondere Druckluft, für die Radbremsen in einem Vorratsdruckspeicher unter statischem Druck bereitgestellt ist. Die Bremsanlagen weisen einen Bremssignalgeber auf, welcher an die Bewegung eines vom Fahrer des Kraftfahrzeugs betätigbaren Bremspedals gekoppelt ist und bei Betätigung des Bremspedals ein Bremsanforderungssignal erzeugt. In Abhängigkeit des Bremsanforderungssignals wird ein Bremssolldruck an den Radbremsen eingestellt. In modernen Fahrzeugen kann der Bremssignalgeber auch rein elektronisch arbeiten, sodass insbesondere von einem zentralen Steuermodul oder dergleichen ein Bremsanforderungssignal ausgegeben wird.

Das elektropneumatische Bremssteuermodul der vorliegenden Erfindung wird insbesondere dazu eingesetzt, ein Bremsanforderungssignal zu empfangen und dann einen entsprechenden ersten Bremsdruck an dem ersten Achskanalanschluss auszugeben. Der erste Achskanalanschluss ist beispielsweise für eine Vorderachse vorgesehen. An der Vorderachse kann der ausgesteuerte erste Bremsdruck dann entweder sowohl für die linke als auch für die rechte Radbremse ausgegeben oder weiter moduliert werden. Das elektropneumatische Bremssteuermodul der vorliegenden Erfindung wird daher auch als Achsmodulator bezeichnet, da es dazu dient, ein (globales) Bremsanforderungssignal für eine der Vorder- und Hinterachsen oder mehrere Achsen separat und vorzugsweise moduliert auszugeben.

Ein elektropneumatisches Bremssteuermodul der vorstehend genannten Art ist aus DE 10 2014 006 614 A1 der hiesigen Anmelderin bekannt. Dort offenbart ist eine pneumatische Bremseinrichtung für Kraftfahrzeuge, enthaltend einen Bremssignalgeber einen Vorratsdruckspeicher und eine pneumatisch betätigbare Radbremse pro Rad sowie wenigstens eine Achse des Kraftfahrzeugs mit jeweils einem elektrisch ansteuerbaren Radbremsmodul pro Rad zur Einstellung eines Soll-Bremsdrucks an der jeweiligen Radbremse, sowie mit einer elektronischen Steuereinheit zur Ermittlung von Vorgabewerten der Soll-Bremsdrücke der Radbremsen unter Berücksichtigung des Bremssignalgebers, welche den Radbremsmodulen vorgebbar sind. Jedes Radbremsmodul umfasst: wenigstens ein Belüftungsventil und ein Entlüftungsventil, elektrisch betätigbare Aktivierungsmittel zur Aktivierung des Belüftungsventils und/oder des Entlüftungsventils, eine Steuerlogik mit Mitteln zur Erzeugung eines Stellsignals für das Aktivierungsmittel entsprechend dem Vorgabewert für den Soll-Bremsdruck. Dabei sind das Belüftungsventil und sein Aktivierungsmittel derart ausgebildet, dass der pneumatische Druck aus dem Vorratsdruckspeicher im betätigten Zustand des Belüftungsventils direkt an die jeweiligen Radbremsen durchsteuerbar ist und/oder das Entlüftungsventil den Bremsdruck an der Radbremse im betätigten Zustand direkt in die Atmosphäre entlüftet. Das heißt, das Radbremsmodul umfasst als Belüftungs- und Entlüftungsventil jeweils ein pneumatisch betätigbares 2/2-Wegeventil. Ein Relaisventil, das zwischen einen Vorratsanschluss und den entsprechenden Anschluss für die Radbremse geschaltet ist, existiert dort nicht. Die elektrisch betätigbaren Aktivierungsmittel sind als elektropneumatische Vorsteuereinheit ausgebildet, die einen entsprechenden Steuerdruck für die 2/2-Wegeventile, die das Belüftungsventil und das Entlüftungsventil bilden, aussteuert.

Auch wenn ein derartiges Radbremsmodul gut funktioniert, besteht weiterhin Bedarf, dieses zu verbessern, insbesondere die Sicherheit des Fahrzeugs zu erhöhen, den Bauraum der Module zu verkleinern sowie preiswerte und kostengünstige Module zu erzeugen, die insbesondere ohne teure und aufwendige Relaisventile auskommen.

Zu einem anderen Thema offenbart DE102015110386 A1 ein Verfahren zum Betreiben eines Bremssystems für ein Fahrzeug, wobei das Bremssystem eine elektronische Stelleinrichtung zum Aussteuern eines Bremsdrucks für eine Bremse des Fahrzeugs in einem Normalbetriebsmodus und eine pneumatische Stelleinrichtung zum Aussteuern des Bremsdrucks in einem Backupbetriebsmodus aufweist. Das Verfahren umfasst einen Schritt des Klassifizierens eines einen Fehler der elektronischen Stelleinrichtung anzeigenden Fehlersignals.

In einem ersten Aspekt der Erfindung wird die eingangs genannte Aufgabe dadurch gelöst, dass das elektropneumatische Bremssteuermodul einen Redundanzdruckanschluss zum Empfangen eines Redundanzdrucks und eine mit dem Redundanzdruckanschluss verbundene Redundanzventileinheit zum Aussteuern eines redundanten Bremsdrucks an dem ersten Achskanalanschluss aufweist, für den Fall, dass die elektropneumatische Vorsteuereinheit einen Fehler hat.

Der Redundanzdruck wird vorzugsweise von einem Bremspedal bereitgestellt. Das heißt, im Fehlerfall kann ein Fahrzeugführer durch Betätigen des Bremspedals einen manuell ausgesteuerten Redundanzdruck erzeugen, der dann an dem Redundanzdruckanschluss bereitgestellt wird. Erfindungsgemäß wird dann dieser Redundanzdruck dazu verwendet, den ersten Bremsdruck zu ersetzen, indem dann an dem ersten Achskanalanschluss ein redundanter Bremsdruck ausgesteuert wird.

Als Fehler der elektropneumatischen Vorsteuereinheit gilt in diesem Fall insbesondere der Ausfall eines oder mehrerer Ventile der elektropneumatischen Vorsteuereinheit, der Ausfall einer elektronischen Steuereinheit, die Stellsignale für die elektropneumatische Vorsteuereinheit bereitstellt, der Ausfall eines zentralen Steuermoduls oder dergleichen. All diese Fälle haben gemein, dass ein elektronisches Bremsanforderungssignal nicht erzeugt, nicht verarbeitet oder nicht richtig verarbeitet werden kann. In diesem Fall wird dann der erste Bremsdruck ersetzt durch den redundanten Bremsdruck.

Auf diese Weise kann die Sicherheit des elektropneumatischen Bremssteuermoduls verbessert werden. Auch für den Fall, dass ein elektronisches Bauteil nicht oder nicht richtig funktioniert, ist dennoch das sichere Bremsen eines Fahrzeugs möglich, in dem der insbesondere mittels des Bremspedals ausgesteuerte Redundanzdruck verarbeitet wird, um den redundanten Bremsdruck auszugeben.

In einer bevorzugten Ausführungsform ist vorgesehen, dass der erste Bremsdruck durch die Einlass-Auslass-Ventileinheit von dem Vorratsanschluss an den ersten Achskanalanschluss direkt und unverstärkt, d.h. ohne eine Verstärkung der Luftmenge oder des Luftdrucks mittels eines, insbesondere pneumatischen, Relaisventils, durchsteuerbar ist. Die Einlass-Auslass-Ventileinheit weist vorzugsweise kein Relaisventil auf. Hierdurch kann der Bauraum reduziert werden und das Modul insgesamt kostengünstiger hergestellt werden.

In einer besonders bevorzugten Ausführungsform ist die Redundanzventileinheit mit der Einlass-Auslass-Ventileinheit derart verbunden, dass der redundante Bremsdruck über eine erste Auslassleitung zur Entlüftung des ersten Achskanalanschlusses im Fehlerfall der Vorsteuereinheit an dem ersten Achskanalanschluss aussteuerbar ist. Hierdurch ist es einerseits möglich, weniger pneumatische Leitungen zu verwenden, da die ohnehin vorhandene erste Auslassleitung notwendig ist, um den ersten Achskanalanschluss zu entlüften. Im Fehlerfall ist es ferner vorteilhaft, wenn die Einlass-Auslass-Ventileinheit so geschaltet ist, dass der erste Achskanalanschluss entlüftet ist oder wird, d.h. nicht belüftet ist bzw. wird. Die dann in diesem Fehlerfall offene erste Auslassleitung wird gemäß dieser Ausführungsform vorteilhaft für die Einsteuerung des redundanten Bremsdrucks verwendet, um den redundanten Bremsdruck an dem ersten Achskanalanschluss auszusteuern.

Weiterhin ist bevorzugt, dass die Einlass-Auslass-Ventileinheit ein erstes pneumatisch schaltbares 2/2-Wege-Einlassventil und ein erstes pneumatisch schaltbares 2/2-Wege-Auslassventil aufweist, wobei das erste pneumatisch schaltbare 2/2-Wege-Einlassventil den ersten Steuerdruck und das erste pneumatisch schaltbare 2/2-Wege-Auslassventil einen zweiten Steuerdruck von der Vorsteuereinheit empfängt. In dieser Ausführungsform stellt die Vorsteuer-einheit sowohl den ersten Steuerdruck als auch den zweiten Steuerdruck bereit. Der erste Steuerdruck wird verwendet, um das erste 2/2-Wege-Einlassventil zu schalten und der zweite Steuerdruck wird verwendet, um das erste 2/2-Wege-Auslassventil zu schalten. Vorzugsweise ist das erste 2/2-Wege-Einlassventil drucklos geschlossen und das erste 2/2-Wege-Auslassventil drucklos offen. Das heißt, sobald der erste Steuerdruck einen bestimmten Schwellwert übersteigt, schaltet das erste 2/2-Wege-Einlassventil in die jeweils andere Schaltstellung. Analog gilt, sobald der zweite Steuerdruck einen bestimmten Schwellwert übersteigt, schaltet das erste 2/2-Wege-Auslassventil in die jeweils andere Schaltstellung. Auf diese Weise kann ein Relaisventil vermieden werden.

In einer bevorzugten Weiterbildung weist das erste pneumatisch schaltbare 2/2-Wege-Einlassventil einen mit dem Vorratsanschluss verbundenen ersten Einlassventilanschluss, einen mit dem ersten Achskanalanschluss verbundenen zweiten Einlassventilanschluss und einen ersten Einlassventilsteueranschluss zum Empfangen des ersten Steuerdrucks auf. Das erste pneumatisch schaltbare 2/2-Wege-Auslassventil weist in entsprechender Weise vorzugsweise einen mit einer Entlüftung verbundenen oder verbindbaren ersten Auslassventilanschluss, einen mit dem ersten Achskanalanschluss verbundenen zweiten Auslassventilanschluss und einen ersten Auslassventilsteueranschluss zum Empfangen des zweiten Steuerdrucks auf. Der Begriff "verbind-bar" bedeutet in diesem Zusammenhang, dass zwischen dem ersten Auslassventilanschluss und der Entlüftung ein oder mehrere weitere Ventile geschaltet sein können, sodass, wenn all diese Ventile offen bzw. die Verbindung der entsprechenden Ventilanschlüsse durchgeschaltet sind, der erste Auslassventilanschluss mit der Entlüftung druckleitend verbunden ist. Mit anderen Worten, über den ersten Auslassventilanschluss kann der erste Achskanalanschluss entlüftet werden.

Erfindungsgemäß weist die Redundanzventileinheit ein Redundanzventil auf. Das Redundanzventil weist einen mit dem Redundanzdruckanschluss verbundenen ersten Redundanzventilanschluss, einen mit dem ersten Achskanalanschluss verbindbaren zweiten Redundanzventilanschluss und einen mit einer Entlüftung verbundenen dritten Redundanzventilanschluss auf. Auch in diesem Zusammenhang bedeutet der Begriff "verbindbar", dass zwischen dem zweiten Redundanzventilanschluss und dem ersten Achskanalanschluss ein oder mehrere weitere Ventile geschaltet sein können, sodass, wenn all diese Ventile offen bzw. die Verbindung der entsprechenden Ventilanschlüsse durchgeschaltet sind, der zweite Redundanzventilanschluss mit dem ersten Achskanalanschluss druckleitend verbunden ist. Das Redundanzventil ist vorzugsweise als 3/2-Wegeventil ausgebildet und so geschaltet, dass in einer ersten stromlosen Schaltstellung der erste Redundanzventilanschluss mit dem zweiten Redundanzventilanschluss verbunden ist und in einer zweiten, bestromten Schaltstellung der dritte Redundanzventilanschluss mit dem zweiten Redundanzventilanschluss verbunden ist. Auf diese Weise lässt sich in einer stromlosen Schaltstellung der Redundanzdruck von dem ersten Redundanzventilanschluss durch das Redundanzventil durchsteuern und an dem zweiten Redundanzventilanschluss bereitstellen, während in einem bestromten Zustand des Redundanzventils der Redundanzdruck ausgesperrt ist. Im Fehlerfall wird dann das Redundanzventil stromlos geschaltet oder ist bereits durch den Fehler ausgeschaltet worden, sodass der Redundanzdruck durchgesteuert werden kann. Dabei ist der zweite Redundanzventilanschluss mit dem ersten Achskanalanschluss verbindbar, sodass dann in diesem Fall der Redundanzdruck als redundanter Bremsdruck verstärkt oder unverstärkt an dem ersten Achskanalanschluss aussteuerbar ist.

Erfindungsgemäß ist vorgesehen, dass die Redundanzventileinheit ein Wechselventil aufweist und der redundante Bremsdruck über das Wechselventil in die erste Auslassleitung einsteuerbar ist. Auf diese Weise wird verhindert, dass beim Entlüften des ersten Achskanalanschlusses Druck zurück zum Redundanzanschluss gesteuert wird bzw. werden kann. Ferner lässt sich auf diese Weise der Redundanzdruck einfach in die erste Auslassleitung einsteuern und dennoch diese gleichzeitig zur Entlüftung des ersten Achskanalanschlusses nutzen, wenn auch im redundanten Bremsfall der erste Achskanalanschluss wieder zum Lösen von Radbremsen entlüftet werden soll.

Zusätzlich oder alternativ kann vorgesehen sein, dass die Redundanzventileinheit ein Relaisventil zum Luftvolumen- oder Luftmengenverstärken des Redundanzdrucks aufweist. Je nach Ausbildung des Redundanzdrucks und der Art der Bereitstellung kann es notwendig sein, diesen volumenzuverstärken bzw. die Luftmenge mittels eines Relaisventils zu erhöhen, um ihn an Radbremsen bereitstellen zu können. Wird beispielsweise der erste Achskanalanschluss dazu verwendet, zunächst einen Druck einem weiteren Modul bereitzustellen, kann es ausreichen, dass der Druck dort an diesem weiteren Modul volumenverstärkt und an die Radbremsen geleitet wird. In dieser Variante aber weist das elektropneumatische Bremssteuermodul selbst ein Relaisventil für den Redundanzdruck auf. Ein solches Relaisventil kann in diesem Fall einfach und klein ausgebildet sein, da es nicht auf einen Dauerbetrieb ausgelegt sein muss. Das Relaisventil dient allein dazu, den Redundanzdruck bzw. die Luftmenge und/oder das Luftvolumen des Redundanzdrucks, der ausschließlich im Fehlerfall verwendet wird, zu verstärken. Daher ist es möglich, das elektropneumatische Bremssteuermodul dennoch bauraum- und kostensparend auszubilden, obwohl es in dieser Ausführungsform ein Relaisventil aufweist.

Vorzugsweise weist das Relaisventil einen mit dem Vorratsanschluss verbundenen Relaisventil-Vorratsanschluss, einen mit einer Entlüftung verbundenen Relaisventil-Entlüftungsanschluss, einen Relaisventil-Arbeitsanschluss zum Aussteuern des redundanten Bremsdrucks in die erste Auslassleitung und einen mit dem Redundanzdruckanschluss verbundenen oder verbindbaren Relaisventil-Steueranschluss auf. Als Steuerdruck empfängt das Relaisventil also den an dem Redundanzdruckanschluss ausgesteuerten Redundanzdruck, der beispielsweise einem manuell erzeugten Druck von einem Bremspedal entsprechen kann. Ist dieser Druck nicht vorhanden oder ausgesperrt, befindet sich das Relaisventil folglich in einer Entlüftungsstellung, da kein Steuerdruck bzw. ein Steuerdruck mit dem Wert des Umgebungsdrucks anliegt; der Relaisventil-Arbeitsanschluss ist in dieser Stellung entlüftet. Das heißt, das Relaisventil kann auch zur Entlüftung der ersten Auslassleitung und somit zur Entlüftung des ersten Achskanalanschlusses verwendet werden. In dem Fall, dass ein Redundanzdruck als Steuerdruck an dem Relaisventil-Steueranschluss anliegt, wird über den Relaisventil-Arbeitsanschluss ein Druck ausgesteuert, der dann als redundanter Bremsdruck über die erste Auslassleitung an den ersten Achskanalanschluss aussteuerbar ist. Auf diese Weise wird eine besonders einfache Schaltung erreicht, die mit einer optimierten Luftführung zwischen den einzelnen Anschlüssen auskommt.

In einer Variante dieser Schaltung ist bevorzugt, dass der Relaisventil-Arbeitsanschluss mit dem ersten Auslassventilanschluss verbunden ist. Vorzugsweise ist der Relaisventil-Arbeitsanschluss direkt mit dem ersten Auslassventilanschluss verbunden, beispielsweise über eine pneumatische Leitung. Das heißt, der erste Achskanalanschluss kann in dieser Ausführungsform über die erste Entlüftungsleitung, das erste 2/2-Wege-Auslassventil und das Relaisventil entlüftet werden. Im Fehlerfall kann dann über das Relaisventil, das erste 2/2-Wege-Auslassventil, die erste Auslassleitung der erste Achskanalanschluss belüftet und ein entsprechender redundanter Bremsdruck ausgesteuert werden.

In dieser Schaltung ist ferner bevorzugt, dass der Relaisventil-Steueranschluss mit dem zweiten Redundanzventilanschluss verbunden ist. Vorzugsweise ist zwischen diesen wiederum eine pneumatische Leitung, insbesondere eine pneumatische Steuerleitung vorgesehen. Sofern sich das Redundanzventil dann in der stromlosen ersten Schaltstellung befindet, kann der Redundanzdruck direkt über dieses an dem Relaisventil-Steueranschluss ausgesteuert werden, um somit den redundanten Bremsdruck an dem ersten Achskanalanschluss auszusteuern.

Weiterhin ist in einer Variante vorgesehen, dass das Wechselventil einen mit dem Redundanzdruckanschluss verbundenen oder verbindbaren ersten Wechselventilanschluss, einen mit einer Entlüftung verbundenen zweiten Wechselventilanschluss und einen mit der ersten Auslassleitung verbundenen oder verbindbaren dritten Wechselventilanschluss aufweist und wechselweise den dritten Wechselventilanschluss mit entweder dem ersten Wechselventilanschluss oder dem zweiten Wechselventilanschluss verbindet. Das Wechselventil ist vorzugsweise als Quick-Release Ventil ausgebildet, sodass der dritte Wechselventilanschluss vorzugsweise mit dem zweiten Wechselventilanschluss verbunden ist und nur bei einer Druckdifferenz zwischen dem ersten Wechselventilanschluss und dem dritten Wechselventilanschluss auf den ersten Wechselventilanschluss ausgesteuert wird. Der zweite Wechselventilanschluss ist mit der Entlüftung verbunden, sodass an diesem permanent der Umgebungsdruck anliegt. Das heißt, der zweite Wechselventilanschluss wird nur dann geschlossen, wenn am ersten Wechselventilanschluss ein Druck anliegt, wie insbesondere der Redundanzdruck. Anderenfalls ist der zweite Wechselventilanschluss permanent mit dem dritten Wechselventilanschluss verbunden, sodass der dritte Wechselventilanschluss über den zweiten Wechselventilanschluss entlüftet werden kann.

In einer ersten Variante ist der erste Wechselventilanschluss dabei mit dem zweiten Redundanzventilanschluss verbunden. An dem ersten Wechselventilanschluss wird also direkt der Redundanzdruck ausgesteuert. Dieser kann dann bei Anliegen an den dritten Wechselventilanschluss durchgesteuert werden.

In einer Variante hierzu ist der erste Wechselventilanschluss mit dem Relaisventil-Arbeitsanschluss verbunden. Das heißt, der vom Relaisventil-Arbeitsanschluss ausgesteuerte Druck wird dann über das Wechselventil geleitet, nämlich über den ersten Wechselventilanschluss und dann an den dritten Wechselventilanschluss ausgegeben. Der zweite Wechselventilanschluss ist in dieser Variante vorzugsweise direkt mit einer Entlüftung verbunden. In dieser Variante ist es dann nicht erforderlich, das Relaisventil auch zur Entlüftung des ersten Achskanalanschlusses zu verwenden, dieser kann vielmehr über den dritten Wechselventilanschluss und den zweiten Wechselventilanschluss direkt entlüftet werden. Es ist also ein direkter Entlüftungsweg geschaffen.

In einer weiteren bevorzugten Ausführungsform ist das elektropneumatische Bremssteuermodul dazu vorgesehen, Bremsdrücke für zwei Achsen auszugeben und weist demgemäß einen zweiten Achskanalanschluss auf. Die Einlass-Auslass-Ventileinheit ist dann dazu ausgebildet, einen zweiten Bremsdruck an dem zweiten Achskanalanschluss auszusteuern. Der erste Achskanalanschluss kann beispielsweise für die Vorderachse vorgesehen sein und der zweite Achskanalanschluss für die Hinterachse. Ebenso könnte vorgesehen sein, dass der erste Achskanalanschluss für ein linkes Rad und der zweite Achskanalanschluss für ein rechtes Rad vorgesehen sind.

Ferner ist in dieser Ausführungsform vorgesehen, dass die elektropneumatische Vorsteuereinheit dazu ausgebildet ist, wenigstens einen dritten Steuerdruck an der Einlass-Auslass-Ventileinheit bereitzustellen, und die Redundanzventileinheit ist dazu ausgebildet, den redundanten Bremsdruck an dem zweiten Achskanalanschluss für den Fall auszusteuern, dass die elektropneumatische Vorsteuereinheit einen Fehler hat. Das heißt, im Fehlerfall wird der Redundanzdruck nicht nur an dem ersten Achskanalanschluss als redundanter Bremsdruck ausgesteuert, sondern auch als redundanter Bremsdruck an dem zweiten Achskanalanschluss. In diesem Fehlerfall wird folglich an beiden Achskanalanschlüssen, sowohl dem ersten als auch dem zweiten Achskanalanschluss, derselbe Bremsdruck ausgesteuert. Es kann auch vorgesehen sein, dass dieser redundante Bremsdruck weiter moduliert wird, wenn die Vorsteuereinheit nicht vollständig, sondern nur teilweise ausgefallen ist, beispielsweise durch Einsatz weiterer Ventile und/oder Select-Low-Ventilen.

In diesem Ausführungsbeispiel ist vorzugsweise ferner vorgesehen, dass die Redundanzventileinheit mit der Einlass-Auslass-Ventileinheit derart verbunden ist, dass der redundante Bremsdruck über eine zweite Auslassleitung zur Entlüftung des zweiten Achskanalanschlusses an dem zweiten Achskanalanschluss im Fehlerfall der Vorsteuereinheit aussteuerbar ist. Dieses Prinzip ist entsprechend dem ersten Achskanalanschluss umgesetzt, und sowohl der erste Achskanalanschluss als auch der zweite Achskanalanschluss sind im Fehlerfall über ihre jeweiligen ersten bzw. zweiten Auslassleitungen belüftbar, um so den redundanten Bremsdruck auszusteuern.

Zu diesem Zweck weist die Einlass-Auslass-Ventileinheit vorzugsweise ein zweites pneumatisch schaltbares 2/2-Wege-Einlassventil und ein zweites pneumatisch schaltbares 2/2-Wege-Auslassventil für den zweiten Achskanalanschluss auf, wobei das zweite pneumatisch schaltbare 2/2-Wege-Einlassventil den dritten Steuerdruck und das zweite pneumatisch schaltbare 2/2-Wege-Auslassventil einen vierten Steuerdruck von der Vorsteuereinheit empfängt. Vorzugsweise ist das zweite 2/2-Wege-Einlassventil drucklos geschlossen und das zweite 2/2-Wege-Auslassventil drucklos offen. Im Grunde können das zweite 2/2-Wege-Einlassventil entsprechend dem ersten 2/2-Wege-Einlassventil und das zweite 2/2-Wege-Auslassventil entsprechend dem ersten 2/2-Wege-Auslassventil ausgebildet sein.

In diesem Sinne ist bevorzugt, dass das zweite pneumatisch schaltbare 2/2-Wege-Einlassventil einen mit dem Vorratsanschluss verbundenen dritten Einlassventilanschluss, einen mit dem zweiten Achskanalanschluss verbundenen vierten Einlassventilanschluss und einen zweiten Einlassventilsteueranschluss zum Empfangen des dritten Steuerdrucks aufweist. Vorzugsweise weist dementsprechend das zweite pneumatisch schaltbare 2/2-Wege-Auslassventil einen mit einer Entlüftung verbundenen oder verbindbaren dritten Auslassventilanschluss und einen mit dem zweiten Achskanalanschluss verbundenen vierten Auslassventilanschluss und einen zweiten Auslassventilsteueranschluss zum Empfangen des vierten Steuerdrucks auf.

Vorzugsweise ist der zweite Redundanzventilanschluss auch mit dem zweiten Achskanalanschluss verbindbar. Der zweite Redundanzventilanschluss, über den der Redundanzdruck weitergeleitet werden kann, ist folglich in dieser Ausführungsform vorzugsweise sowohl mit dem ersten Achskanalanschluss als auch mit dem zweiten Achskanalanschluss verbindbar, um so den redundanten Bremsdruck an sowohl dem ersten Achskanalanschluss als auch dem zweiten Achskanalanschluss auszusteuern.

In übereinstimmender Weise ist auch bevorzugt, dass, wenn die Redundanzventileinheit ein Wechselventil aufweist, der redundante Bremsdruck über das Wechselventil in die zweite Auslassleitung einsteuerbar ist.

Für den Fall, dass die Redundanzventileinheit ein Relaisventil aufweist, ist auch bevorzugt, dass der redundante Bremsdruck über den Relaisventil-Arbeitsanschluss nicht nur in die erste Auslassleitung, sondern auch in die zweite Auslassleitung einsteuerbar ist. Insbesondere und bevorzugt ist der Relaisventil-Arbeitsanschluss mit dem dritten Auslassventilanschluss verbunden. Der Relaisventil-Arbeitsanschluss ist also mit sowohl dem ersten Auslassventilanschluss als auch dem dritten Auslassventilanschluss verbunden, was über eine Abzweigleitung realisiert werden kann.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wo zur Erläuterung dienlich, in schematisierter und/oder leicht verzerrter Form ausgeführt. Bei nen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile der Erfindung ergeben sich aus der nachfolgenden Beschreibung der bevorzugten Ausführungsformen sowie anhand der Zeichnungen; diese zeigen in:
- Fig. 1: ein elektropneumatisches Bremssteuermodul in einem ersten Ausführungsbeispiel mit einem Achskanalanschluss;
- Fig. 2: ein elektropneumatisches Bremssteuermodul in einem zweiten Ausführungsbeispiel mit zwei Achskanalanschlüssen;
- Fig. 3: ein elektropneumatisches Bremssteuermodul in einem dritten Ausführungsbeispiel mit zwei Achskanalanschlüssen und Wechselventil; und
- Fig. 4: ein elektropneumatisches Bremssteuermodul in einem vierten Ausführungsbeispiel mit zwei Achskanalanschlüssen, Wechselventil, aber ohne Relaisventil in der Redundanzventileinheit.

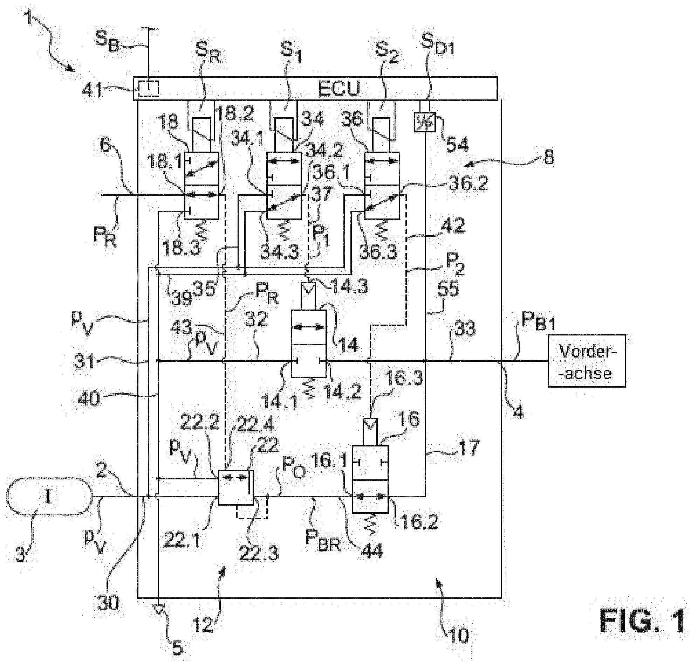

Ein elektropneumatisches Bremssteuermodul 1 gemäß der vorliegenden Erfindung weist einen Vorratsanschluss 2 sowie einen ersten Achskanalanschluss 4 auf. An dem Vorratsanschluss 2 ist ein Druckluftvorrat 3 anschließbar, sodass ein Vorratsdruck PV bereitgestellt wird. An dem ersten Achskanalanschluss 4 wird ein erster Bremsdruck PB1 ausgesteuert, der dann direkt oder weitermoduliert an eine, zwei oder mehr Radbremsen einer ersten Achse ausgegeben werden kann. In dem vorliegenden Beispiel (Fig. 1) wird der erste Bremsdruck PB1 über den ersten Achskanalanschluss 4 an die Vorderachse ausgegeben. Insgesamt ist das elektropneumatische Bremssteuermodul 1 als sogenannter Achsmodulator ausgebildet und dient dazu, ein Bremsanforderungssignal SB zu empfangen, welches insbesondere von einem Bremssignalgeber elektronisch abgegriffen wird oder von einer Zentraleinheit, beispielsweise einer Einheit für autonomes Fahren oder dergleichen ausgegeben wird. Dieses Bremsanforderungssignal SB wird durch das elektropneumatische Bremssteuermodul 1 verarbeitet und in entsprechender Weise wird der erste Bremsdruck PB1 an dem ersten Achskanalanschluss 4 ausgesteuert.

Neben dem ersten Achskanalanschluss 4 weist das elektropneumatische Bremssteuermodul 1 auch einen Redundanzdruckanschluss 6 auf, an dem ein Redundanzdruck PR ausgesteuert werden kann. Der Redundanzdruck PR wird insbesondere manuell über ein Bremspedal erzeugt, sodass auch in einem stromlosen Zustand, beispielsweise wenn ein Zentralmodul ausfällt, ein Bremsanforderungssignal dann in der Form des Redundanzdrucks PR an dem elektropneumatischen Bremssteuermodul 1 ausgegeben werden kann.

Zum Verarbeiten der Eingangssignale, wie dem Bremsanforderungssignal SB und dem Redundanzdruck PR, weist das elektropneumatische Bremssteuermodul 1 eine elektropneumatische Vorsteuereinheit 8 sowie eine pneumatisch gesteuerte Einlass-Auslass-Ventileinheit 10 auf. Zum Verarbeiten des Redundanzdrucks PR weist das elektropneumatische Bremssteuermodul 1 ferner eine Redundanzventileinheit 12 auf. Über diese lässt sich ausgehend vom Redundanzdruck PR an dem ersten Achskanalanschluss 4 ein redundanter Bremsdruck PBR aussteuern, der in einem Fehlerfall den ersten Bremsdruck PB1 ersetzt. Die elektropneumatische Vorsteuereinheit 8 stellt sowohl einen ersten Steuerdruck P1 als auch einen zweites Steuerdruck P2 bereit.

Genauer gesagt umfasst die Einlass-Auslass-Ventileinheit 10 in diesem ersten Ausführungsbeispiel ein erstes pneumatisch schaltbares 2/2-Wege-Einlassventil 14 und ein erstes pneumatisch schaltbares 2/2-Wege-Auslassventil 16. Das 2/2-Wege-Einlassventil 14 weist einen ersten Einlassventilanschluss 14.1 auf, der mit dem Vorratsanschluss 2 verbunden ist. Dazu verläuft von dem Vorratsanschluss 2 in diesem Ausführungsbeispiel eine erste Vorratsdruckleitung 30, von der eine zweite Vorratsdruckleitung 31 abzweigt, von der wiederum eine dritte Vorratsdruckleitung 32 abzweigt, die dann mit dem ersten Einlassventilanschluss 14.1 verbunden ist. Der zweite Einlassventilanschluss 14.2 ist mit dem ersten Achskanalanschluss 4 verbunden, und zwar in diesem Ausführungsbeispiel mittels einer ersten Bremsdruckleitung 33. Das 2/2-Wege-Einlassventil 14 ist pneumatisch schaltbar und drucklos in einer ersten geschlossenen Schaltstellung, die in Fig. 1 gezeigt ist. Sobald der erste Steuerdruck P1, der an dem ersten Einlassventilsteueranschluss 14.3 anliegt, einen bestimmten Schwellwert überschreitet, schaltet das erste 2/2-Wege-Einlassventil 14 in die zweite in Fig. 1 nicht gezeigte Schaltstellung, in der dann der erste Einlassventilanschluss 14.1 mit dem zweiten Einlassventilanschluss 14.2 druckleitend in Verbindung stehen und der Vorratsdruck PV direkt und unverstärkt in die erste Bremsdruckleitung 33 ausgesteuert wird und an dem ersten Achskanalanschluss 4 als erster Bremsdruck PB1 ausgesteuert wird.

Um den ersten Achskanalanschluss 4 zu entlüften und so eine Bremse zu lösen, weist die Einlass-Auslass-Ventileinheit 10 das erste 2/2-Wege-Auslassventil 16 auf. Das erste 2/2-Wege-Auslassventil 16 weist einen ersten Auslassventilanschluss 16.1 und einen zweiten Auslassventilanschluss 16.2 auf, sowie einen ersten Auslassventilsteueranschluss 16.3. Der zweite Auslassventilanschluss 16.2 ist mit dem ersten Achskanalanschluss 4 verbunden. Genauer gesagt ist der zweite Auslassventilanschluss 16.2 mit einer ersten Auslassleitung 17 verbunden, die ihrerseits von der ersten Bremsdruckleitung 33 abzweigt, sodass bei geöffnetem ersten 2/2-Wege-Auslassventil 16 die erste Bremsdruckleitung 33 und so der erste Achskanalanschluss 4 mit einer Entlüftung 5 verbindbar sind. Der erste Auslassventilanschluss 16.1 ist in diesem Ausführungsbeispiel (Fig. 1) mit der Redundanzventileinheit 12 verbunden und über diese mit der Entlüftung 5. Die genaue Schaltung wird im Folgenden weiter unten beschrieben werden. Das erste 2/2-Wege-Auslassventil 16 ist drucklos in einer offenen ersten in Fig. 1 gezeigten Schaltstellung. Sobald der an dem ersten Auslassventilsteueranschluss 16.3 ausgesteuerte zweite Steuerdruck P2 einen bestimmten Schwellwert überschreitet, schaltet das erste 2/2-Wege-Auslassventil 16 in die zweite in Fig. 1 nicht gezeigte Schaltstellung, in der der erste Auslassventilanschluss 16.1 und der zweite Auslassventilanschluss 16.2 getrennt sind.

Um die den ersten Steuerdruck P1 als auch den zweiten Steuerdruck P2 bereitzustellen, weist die Vorsteuereinheit 8 ein erstes Vorsteuereinlassventil 34 und ein erstes Vorsteuerauslassventil 36 auf. Sowohl das erste Vorsteuereinlassventil 34 als auch das erste Vorsteuerauslassventil 36 sind als elektrisch schaltbare 3/2-Wegeventile ausgebildet. Dementsprechend weist das erste Vorsteuereinlassventil 34 einen ersten Vorsteuereinlassventilanschluss 34.1, einen zweiten Vorsteuereinlassventilanschluss 34.2 und einen dritten Vorsteuereinlassventilanschluss 34.3 auf. Der erste Vorsteuereinlassventilanschluss 34.1 ist mit dem Vorratsanschluss 2 verbunden, genauer gesagt mit einer vierten Vorratsdruckleitung 35, die von der zweiten Vorratsdruckleitung 31 abzweigt. Der zweite Vorsteuereinlassventilanschluss 34.2 ist mit einer ersten Steuerleitung 37 verbunden, in der der erste Steuerdruck P1 aussteuerbar ist und die ihrerseits mit dem ersten Einlassventilsteueranschluss 14.3 verbunden ist. Der dritte Vorsteuereinlassventilanschluss 34.3 hingegen ist mit einer Entlüftung 5 verbunden, genauer gesagt mit einer dritten Entlüftungsleitung 38, die ihrerseits mit einer vierten Entlüftungsleitung 39 verbunden ist, die ihrerseits in eine fünfte Entlüftungsleitung 40 mündet. Die fünfte Entlüftungsleitung 40 geht dann zu einer gemeinsamen Entlüftung 5 für das gesamte elektropneumatische Bremssteuermodul 1.

Das erste Vorsteuereinlassventil 34 ist elektrisch schaltbar und empfängt ein erstes Schaltsignal S1. Das erste Schaltsignal S1 wird von einer elektronischen Steuereinheit ECU ausgegeben, die das gesamte elektropneumatische Bremssteuermodul 1 steuert. Die elektronische Steuereinheit ECU empfängt über einen elektrischen Anschluss 41 das Bremsanforderungssignal SB und ermittelt basierend hierauf das erste Schaltsignal S1. Der elektrische Anschluss 41 kann beispielsweise als CAN-Bus-Anschluss ausgebildet sein.

In einer stromlosen ersten in Fig. 1 gezeigten Schaltstellung ist der zweite Vorsteuereinlassventilanschluss 34.2 mit dem dritten Vorsteuereinlassventilanschluss 34.3 verbunden, sodass die erste Steuerleitung 37 und damit auch der erste Einlassventilsteueranschluss 14.3 entlüftet werden. In der in Fig. 1 gezeigten ersten Schaltstellung des ersten Vorsteuereinlassventils 34 ist folglich das erste 2/2-Wege-Einlassventil 14 in der geschlossenen gezeigten Schaltstellung.

In der zweiten in Fig. 1 nicht gezeigten Schaltstellung des ersten Vorsteuereinlassventils 34 ist der erste Vorsteuereinlassventilanschluss mit dem zweiten Vorsteuereinlassventilanschluss verbunden, sodass der Vorratsdruck PV an dem zweiten Vorsteuereinlassventilanschluss 34.2 ausgesteuert wird. Dieser wird dann als erster Steuerdruck P1 an dem ersten Einlassventilsteueranschluss 14.3 bereitgestellt, sodass das erste 2/2-Wege-Einlassventil 14 in die zweite in Fig. 1 nicht gezeigte Schaltstellung schaltet.

In gleicher Weise weist das erste Vorsteuerauslassventil 36 einen ersten Vorsteuerauslassventilanschluss 36.1, einen zweiten Vorsteuerauslassventilanschluss 36.2 und einen dritten Vorsteuerauslassventilanschluss 36.3 auf. Der erste Vorsteuerauslassventilanschluss 36.1 ist mit dem Vorratsanschluss 2 verbunden. Genauer gesagt ist der erste Vorsteuerauslassventilanschluss 36.1 mit der zweiten Vorratsdruckleitung 31 verbunden. An dem ersten Vorsteuerauslassventilanschluss 36.1 liegt folglich der Vorratsdruck PV an. Der zweite Vorsteuerauslassventilanschluss 36.2 ist mit einer zweiten Steuerleitung 42 verbunden, die ihrerseits mit dem ersten Auslassventilsteueranschluss 16.3 verbunden ist. Der dritte Vorsteuerauslassventilanschluss 36.3 ist mit der Entlüftung 5 verbunden, in diesem Ausführungsbeispiel über die vierte Entlüftungsleitung 39. Das erste Vorsteuerauslassventil 36 ist ebenso wie das erste Vorsteuereinlassventil 34 elektrisch schaltbar und empfängt ein zweites Schaltsignal S2 von der elektronischen Steuereinheit ECU. In der stromlosen in Fig. 1 gezeigten ersten Schaltstellung des ersten Vorsteuerauslassventils 36 ist der zweite Vorsteuerauslassventilanschluss 36.2 mit dem dritten Vorsteuerauslassventilanschluss 36.3 verbunden, sodass die zweite Steuerleitung 42 entlüftet wird. Das erste 2/2-Wege-Auslassventil 16 ist folglich in der in Fig. 1 gezeigten ersten Schaltstellung. In einer bestromten zweiten in Fig. 1 nicht gezeigten Schaltstellung des ersten Vorsteuerauslassventils 36 ist der erste Vorsteuerauslassventilanschluss 36.1 mit dem zweiten Vorsteuerauslassventilanschluss 36.2 verbunden, sodass der zweite Steuerdruck P2 in der zweiten Steuerleitung 42 ausgesteuert wird. Infolgedessen schaltet das erste 2/2-Wege-Auslassventil 16 in die zweite in Fig. 1 nicht gezeigte Schaltstellung, in der das erste 2/2-Wege-Auslassventil 16 geschlossen ist.

Hat nun die Vorsteuereinheit 8 einen Fehler, beispielsweise weil die elektronische Steuereinheit ECU ausfällt oder nicht richtig funktioniert, das Bremsanforderungssignal SB nicht oder nicht richtig empfangen wird, weil beispielsweise ein Zentralmodul nicht funktioniert oder die Stromversorgung des Fahrzeugs ausgefallen ist, bleiben sowohl das erste Vorsteuereinlassventil 34 als auch das erste Vorsteuerauslassventil 36 in der stromlosen ersten in Fig. 1 gezeigten Schaltstellung. Eine Betätigung des ersten 2/2-Wege-Einlassventils 14 und des ersten 2/2-Wege-Auslassventils 16 ist dann nicht mehr möglich. Zu diesem Zweck weist das elektropneumatische Bremssteuermodul 1 den Redundanzdruckanschluss 6 auf, über den der Redundanzdruck PR empfangen wird. Über die Redundanzventileinheit 12 lässt sich dann in diesem Fall ein redundanter Bremsdruck PBR an dem ersten Achskanalanschluss 4 aussteuern, und zwar über die erste Auslassleitung 17, die im Normalfall zum Entlüften des ersten Achskanalanschlusses 4 dient. Das heißt, das offene erste 2/2-Wege-Auslassventil 16 wird dazu verwendet, den redundanten Bremsdruck PBR an dem ersten Achskanalanschluss 4 auszusteuern.

Zu diesem Zweck weist die Redundanzventileinheit 12 erfindungsgemäß (Fig. 1) ein Redundanzventil 18 auf, das zum Aussperren des Redundanzdrucks PR im Normalfall dient. Das Redundanzventil 18 ist als elektrisch schaltbares 3/2-Wegeventil ausgebildet und weist einen ersten Redundanzventilanschluss 18.1, einen zweiten Redundanzventilanschluss 18.2 und einen dritten Redundanzventilanschluss 18.3 auf. Der erste Redundanzventilanschluss 18.1 ist mit dem Redundanzdruckanschluss 6 verbunden. Der zweite Redundanzventilanschluss 18.2 ist über eine Redundanzdrucksteuerleitung 43 verbunden. Der dritte Redundanzventilanschluss 18.3 ist mit einer oder der Entlüftung 5 verbunden, in diesem Fall über die fünfte Entlüftungsleitung 40. In der ersten in Fig. 1 gezeigten stromlosen Schaltstellung ist der erste Redundanzventilanschluss 18.1 mit dem zweiten Redundanzventilanschluss 18.2 verbunden. In einer bestromten in Fig. 1 nicht gezeigten Schaltstellung hingegen ist der dritte Redundanzventilanschluss 18.3 mit dem zweiten Redundanzventilanschluss 18.2 verbunden. Im Normalfall, wenn die elektronische Steuereinheit ECU funktioniert, kann das Redundanzschaltsignal SR bereitgestellt werden und das Redundanzventil 18 in die zweite in Fig.1 nicht gezeigte Schaltstellung geschaltet werden. Der Redundanzdruck PR ist ausgesperrt und die Redundanzdrucksteuerleitung 43 entlüftet. In der ersten in Fig. 1 gezeigten Schaltstellung allerdings, in der das Redundanzventil 18 stromlos ist, wird der Redundanzdruck PR in die Redundanzdrucksteuerleitung 43 ausgesteuert.

Um diesen meist manuell über ein Bremspedal ausgesteuerten Redundanzdruck PR nun volumenzuverstärken, weist die Redundanzventileinheit 12 in diesem Ausführungsbeispiel (Fig. 1) ein Relaisventil 22 auf. Das Relaisventil 22 kann klein und kostengünstig dimensioniert sein, da es nur für den Redundanzfall eingesetzt wird und daher nicht für einen Dauerbetrieb ausgelegt sein muss.

Das Relaisventil 22 weist einen Relaisventil-Vorratsanschluss 22.1, einen Relaisventil-Entlüftungsanschluss 22.2, einen Relaisventil-Arbeitsanschluss 22.3 sowie einen Relaisventil-Steueranschluss 22.4 auf. Die Redundanzdrucksteuerleitung 43 ist mit dem Relaisventil-Steueranschluss 22.4 verbunden, sodass an dem Relaisventil-Steueranschluss 22.4 der im Fehlerfall ausgesteuerte Redundanzdruck PR ausgesteuert wird. Der Relaisventil-Vorratsanschluss 22.1 ist mit dem Vorratsanschluss 2 verbunden, sodass an diesem der Vorratsdruck PV anliegt. Der Relaisventil-Entlüftungsanschluss 22.2 ist mit einer oder der Entlüftung 5 verbunden. Der Relaisventil-Arbeitsanschluss 22.3 ist in diesem Ausführungsbeispiel (Fig. 1) mit dem ersten Auslassventilanschluss 16.1 verbunden. Dies ist über eine sechste Entlüftungsleitung 44 realisiert.

Im Normalbetrieb, wenn kein Fehler vorliegt, wird der Redundanzdruck PR ausgesperrt, indem das Redundanzschaltsignal SR bereitgestellt wird. Der Relaisventil-Steueranschluss 22.4 ist entlüftet und das Relaisventil 22 in einer Entlüftungsstellung, in der auch der Relaisventil-Arbeitsanschluss 22.3 entlüftet ist. Das heißt, die erste Auslassleitung 17 kann, wenn das erste 2/2-Wege-Auslassventil 16 geöffnet ist, über das Relaisventil 22 entlüftet werden. In dieser entlüfteten Schaltstellung ist das Relaisventil 22 im üblichen Fahrbetrieb.

Erst wenn ein Fehler auftritt, wird das Redundanzventil 18 stromlos geschaltet, sodass dann der Redundanzdruck PR an dem Relaisventil-Steueranschluss 22.4 ausgesteuert wird. In diesem Fall ist auch das erste 2/2-Wege-Auslassventil 16 in der offenen Schaltstellung, wie oben beschrieben wurde. Das Relaisventil 22 verstärkt den am Relaisventil-Steueranschluss 22.4 empfangenen Redundanzdruck PR und steuert einen entsprechenden redundanten Bremsdruck PBR in die sechste Entlüftungsleitung 44 ein, über die dann der redundante Bremsdruck PBR über das erste 2/2-Wege-Auslassventil 16 und die erste Auslassleitung 17 an dem ersten Achskanalanschluss 4 bereitgestellt wird.

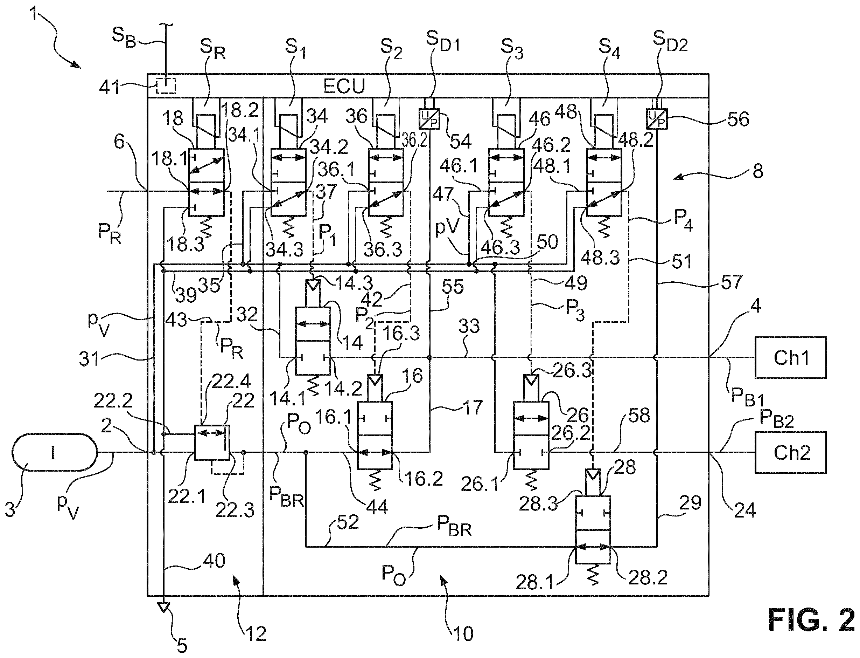

In einem zweiten in Fig. 2 gezeigten Ausführungsbeispiel liegt der wesentliche Unterschied zum ersten Ausführungsbeispiel (Fig. 1) darin, dass das elektropneumatische Bremssteuermodul 1 einen zweiten Achskanalanschluss 24 aufweist. Der zweite Achskanalanschluss 24 kann beispielsweise für eine Hinterachse vorgesehen sein. Alternativ können auch der erste Achskanalanschluss 4 und der zweite Achskanalanschluss 24 für linke und rechte Räder einer einzigen Achse genutzt werden. Gemäß diesem Ausführungsbeispiel (Fig. 2) ist es möglich, an den zweiten Achskanalanschluss 24 einen zweiten Bremsdruck PB2 auszusteuern, der unabhängig vom ersten Bremsdruck PB1 ist. Hierzu unterscheiden sich sowohl die Vorsteuereinheit 8 als auch die Einlass-Auslass-Ventileinheit 10 vom ersten Ausführungsbeispiel. Im Folgenden werden insbesondere die Unterschiede hervorgehoben. Die Redundanzventileinheit 12 ist identisch zum ersten Ausführungsbeispiel (Fig. 1) ausgebildet, und insoweit wird vollumfänglich auf die obige Beschreibung Bezug genommen.

Um nun an dem zweiten Achskanalanschluss 24 den zweiten Bremsdruck PB2 unabhängig vom ersten Bremsdruck PB1 auszusteuern, weist die Einlass-Auslass-Ventileinheit 10 ein zweites pneumatisch schaltbares 2/2-Wege-Einlassventil 26 für den zweiten Achskanalanschluss 24 sowie ein zweites pneumatisch schaltbares 2/2-Wege-Auslassventil 28 für den zweiten Achskanalanschluss 24 auf. Über das zweite 2/2-Wege-Einlassventil 26 lässt sich der zweite Achskanalanschluss 24 belüften, und über das zweite 2/2-Wege-Auslassventil lässt sich der zweite Achskanalanschluss 24 entlüften. Diese Schaltung ist grundsätzlich schon vom ersten Achskanalanschluss 4 gemäß Fig. 1 bekannt.

Zum Bereitstellen entsprechender dritter und vierter Steuerdrücke P3, P4 weist die Vorsteuereinheit 8 ein zweites Vorsteuereinlassventil 46 sowie ein zweites Vorsteuerauslassventil 48 auf. Ebenso wie das erste Vorsteuereinlassventil 34 und das erste Vorsteuerauslassventil 36 sind auch das zweite Vorsteuereinlassventil 46 und das zweite Vorsteuerauslassventil 48 als elektrisch schaltbare 3/2-Wegeventile ausgebildet. Das zweite Vorsteuereinlassventil 46 weist einen vierten Vorsteuereinlassventilanschluss 46.1, einen fünften Vorsteuereinlassventilanschluss 46.2 und einen sechsten Vorsteuereinlassventilanschluss 46.3 auf. Der vierte Vorsteuereinlassventilanschluss 46.1 ist mit dem Vorratsanschluss 2 verbunden, sodass an diesem der Vorratsdruck PV ausgesteuert ist. Genauer gesagt ist der vierte Vorsteuereinlassventilanschluss 46.1 mit einer fünften Vorratsdruckleitung 47 verbunden, die ihrerseits von der zweiten Vorratsdruckleitung in diesem Ausführungsbeispiel abzweigt. Der fünfte Vorsteuereinlassventilanschluss 46.2 ist mit einer dritten Steuerleitung 49 verbunden, die ihrerseits mit einem zweiten Einlassventilsteueranschluss 26.3 des zweiten pneumatisch schaltbaren 2/2-Wege-Einlassventils 26 verbunden ist, um an diesem den dritten Steuerdruck P3 auszusteuern. Der sechste Vorsteuereinlassventilanschluss 46.3 ist mit einer oder der Entlüftung 5 verbunden, in diesem Fall über eine siebte Entlüftungsleitung 50 und die fünfte Entlüftungsleitung 40.

In übereinstimmender Weise weist das zweite Vorsteuerauslassventil 48 einen vierten Vorsteuerauslassventilanschluss 48.1, einen fünften Vorsteuerauslassventilanschluss 48.2 und einen sechsten Vorsteuerauslassventilanschluss 48.3 auf. Der vierte Vorsteuerauslassventilanschluss 48.1 ist mit dem Vorratsanschluss 2 verbunden, in diesem Ausführungsbeispiel mit der zweiten Vorratsdruckleitung 31, sodass an dem vierten Vorsteuerauslassventilanschluss 48.1 der Vorratsdruck PV anliegt. Der fünfte Vorsteuerauslassventilanschluss 48.2 ist mit einer vierten Steuerleitung 51 verbunden, die ihrerseits mit einem zweiten Auslassventilsteueranschluss 28.3 des zweiten 2/2-Wege-Auslassventils 28 verbunden ist, um an diesem den vierten Steuerdruck P4 bereitzustellen. Der sechste Vorsteuerauslassventilanschluss 48.3 ist mit einer oder der Entlüftung verbunden, in diesem Ausführungsbeispiel realisiert über die vierte Entlüftungsleitung 39. In einer in Fig. 2 gezeigten ersten stromlosen Schaltstellung ist der sechste Vorsteuerauslassventilanschluss 48.3 mit dem fünften Vorsteuerauslassventilanschluss 48.2 verbunden, sodass die vierte Entlüftungsleitung 51 und damit der zweite Auslassventilsteueranschluss 28.3 entlüftet sind. Das zweite 2/2-Wege-Auslassventil 28 ist in der in Fig. 2 gezeigten ersten offenen Schaltstellung. In einer zweiten in Fig. 2 nicht gezeigten bestromten Schaltstellung ist das zweite Vorsteuerauslassventil so geschaltet, dass der vierte Vorsteuerauslassventilanschluss 48.1 mit dem fünften Vorsteuerauslassventilanschluss 48.2 verbunden sind und somit der vierte Steuerdruck P4 ausgesteuert wird. In dieser Folge wird das zweite 2/2-Wege-Auslassventil 28 geschaltet, sodass dieses in der geschlossenen in Fig. 2 nicht gezeigten Schaltstellung ist.

Um nun im Fehlerfall, in dem eines oder mehrere der ersten bis vierten Schaltsignale S1 bis S4 nicht bereitgestellt werden können, weil beispielsweise die Vorsteuereinheit 8 einen Fehler hat, die elektronische Steuereinheit ECU einen Fehler hat oder das Bremsanforderungssignal SB nicht oder nicht richtig bereitgestellt wird, wird auch an dem zweiten Achskanalanschluss 24 der redundante Bremsdruck PR ausgesteuert. Dies wird, wie das auch für den ersten Achskanalanschluss 4 der Fall ist, über eine Auslassleitung, nämlich über die zweite Auslassleitung 29 realisiert, die dazu vorgesehen ist, den zweiten Achskanalanschluss 24 mit Hilfe des zweiten 2/2-Wege-Auslassventils 28 zu entlüften. Zu diesem Zweck ist in dem Ausführungsbeispiel gemäß Fig. 2 der dritte Auslassventilanschluss 28.1 mit der Redundanzventileinheit 12 auf dieselbe Weise verbunden wie oben bereits mit Bezug auf den ersten Auslassventilanschluss 16.1 beschrieben. In dem in Fig. 2 gezeigten Ausführungsbeispiel ist das dadurch realisiert, dass eine achte Entlüftungsleitung 52 den dritten Auslassventilanschluss 28.1 mit der sechsten Entlüftungsleitung 44 verbindet, sodass in der achten Entlüftungsleitung 52 wahlweise Umgebungsdruck P0 oder der redundante Bremsdruck PBR ausgesteuert werden. Steuert das Relaisventil 22 in diesem Ausführungsbeispiel basierend auf dem Redundanzdruck PR, wenn das Redundanzventil 18 in der ersten in Fig. 2 gezeigten Schaltstellung ist, den redundanten Bremsdruck PBR aus, wird dieser sowohl über die sechste Entlüftungsleitung 44 an dem ersten Auslassventilanschluss 16.1 als auch über die achte Entlüftungsleitung 52 an dem dritten Auslassventilanschluss 28.1 ausgesteuert und dann über das erste 2/2-Wege-Auslassventil 16 und das zweite 2/2-Wege-Auslassventil 28 an dem ersten Achskanalanschluss 4 und dem zweiten Achskanalanschluss 24 bereitgestellt.

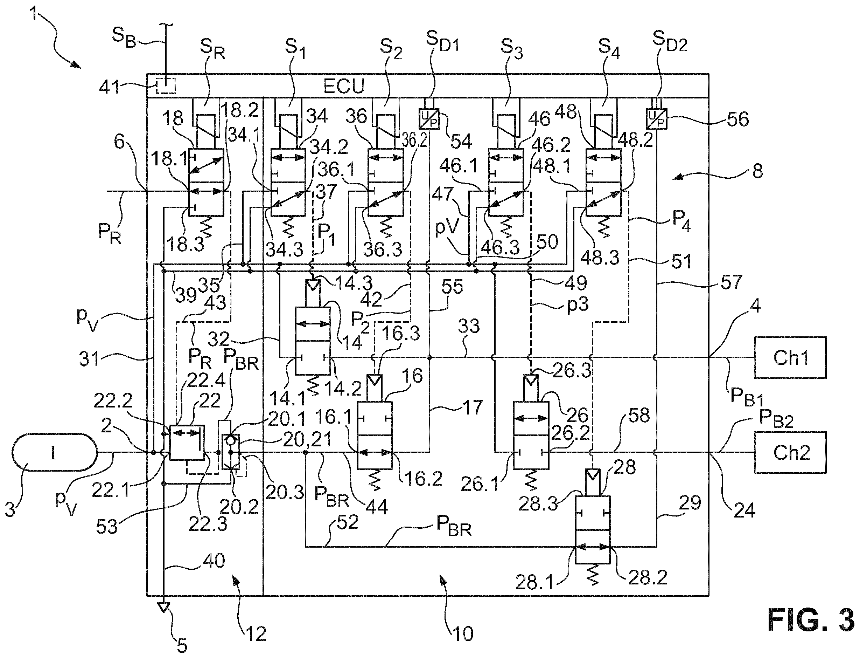

Das dritte Ausführungsbeispiel (Fig. 3) entspricht in weiten Teilen dem zweiten Ausführungsbeispiel (Fig. 2), unterscheidet sich jedoch in der Gestaltung der Redundanzventileinheit 12. Im Folgenden werden insbesondere die Unterschiede hervorgehoben, wobei für die Gemeinsamkeiten auf die obige Beschreibung zum ersten und zum zweiten Ausführungsbeispiel (Fig. 1 und 2) verwiesen wird.

Der Unterschied zum zweiten Ausführungsbeispiel (Fig. 2) liegt darin, dass die Redundanzventileinheit 12 zusätzlich ein Wechselventil 20 aufweist. Das Wechselventil 20 ist zwischen das Relaisventil 12 und das erste 2/2-Wege-Auslassventil 16 bzw. das zweite 2/2-Wege-Auslassventil 28 geschaltet. Das heißt, der erste und zweite Achskanalanschluss 4, 24 lassen sind in diesem dritten Ausführungsbeispiel (Fig. 3) über das Wechselventil 20 entlüften, unter Umgehung des Relaisventils 22; das Relaisventil 22 muss in diesem Ausführungsbeispiel (Fig. 3) nicht zur Entlüftung des ersten und zweiten Achskanalanschlusses 4, 24 verwendet werden. Zu diesem Zweck ist das Wechselventil, welches vorzugsweise als sogenanntes Select-High-Ventil 21 ausgebildet ist, mit einem ersten Wechselventilanschluss 20.1, einem zweiten Wechselventilanschluss 20.2 und einem dritten Wechselventilanschluss 20.3 versehen, wobei wahlweise der dritte Wechselventilanschluss 20.3 mit dem ersten Wechselventilanschluss 20.1 oder dem zweiten Wechselventilanschluss 20.2 verbunden ist. In einer Ruhestellung ist das Wechselventil 20 so ausgelegt, dass der dritte Wechselventilanschluss 20.3 mit dem zweiten Wechselventilanschluss 20.2 verbunden sind. Erst wenn ein Druck, der vorzugsweise einen bestimmten Schwellwert überschreitet, an dem ersten Wechselventilanschluss 20.1 ausgesteuert wird, wird dieser an den dritten Wechselventilanschluss 20.3 weitergegeben; der zweite Wechselventilanschluss 20.2 ist in diesem Fall gesperrt.

In dem konkreten in Fig. 3 gezeigten Ausführungsbeispiel ist, um diese Funktionalität zu erreichen, der dritte Wechselventilanschluss 20.3 mit der sechsten Entlüftungsleitung 44 verbunden, von der auch die achte Entlüftungsleitung 52 abzweigt. Der zweite Wechselventilanschluss 20.2 ist seinerseits mit einer neunten Entlüftungsleitung 53 verbunden, die ihrerseits mit der Entlüftung 5 direkt oder indirekt verbunden sein kann; in diesem Ausführungsbeispiel zunächst in die fünfte Entlüftungsleitung 40 mündet. Das heißt, im Ruhezustand ist die sechste Entlüftungsleitung permanent über das Wechselventil 20 mit der Entlüftung 5 verbunden, sodass eine direkte Entlüftung stattfinden kann.

Der erste Wechselventilanschluss 20.1 ist seinerseits mit dem Relaisventil-Arbeitsanschluss 22.3 verbunden, sodass an diesem in dem Redundanzfall der vom Relaisventil 22 ausgesteuerte redundante Bremsdruck PBR anliegt. Im Fehlerfall wird dieser redundante Bremsdruck PBR dann über den ersten Wechselventilanschluss 20.1 an den dritten Wechselventilanschluss 20.3 übergeben und von dort in die sechste Entlüftungsleitung 44 und die achte Entlüftungsleitung 52 ausgesteuert. Von diesen Leitungen ausgehend wird der redundante Bremsdruck PBR dann über das erste 2/2-Wege-Auslassventil 16, das zweite 2/2-Wege-Auslassventil 28 sowie die erste Auslassleitung 17 und die zweite Auslassleitung 29 an den ersten und zweiten Achskanalanschlüssen 4, 24 bereitgestellt.

Auf diese Weise kann das Relaisventil 22 noch einfacherer ausgebildet sein, da es auch im Normalbetrieb nicht für die Entlüftung der ersten und zweiten Achskanalanschlüsse 4, 24 verwendet wird, sondern ausschließlich im Fehlerfall und nur dann, wenn der redundante Bremsdruck PBR an den ersten und zweiten Achskanalanschlüssen 4, 24 ausgesteuert werden soll, zum Einsatz kommt.

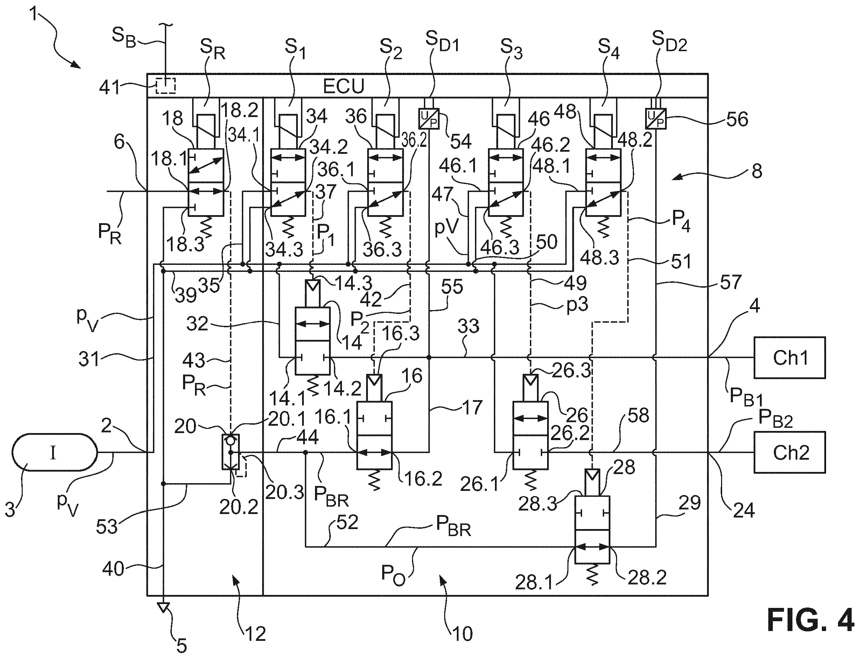

Fig. 4 illustriert nun ein viertes Ausführungsbeispiel. Wiederum werden die Unterschiede hervorgehoben, wobei für die Gemeinsamkeiten auf die vorherigen drei Ausführungsbeispiele (Fig. 1 bis 3) verwiesen wird.

Das vierte Ausführungsbeispiel ähnelt grundsätzlich dem dritten Ausführungsbeispiel (Fig. 3). Der Unterschied liegt wiederum in der Redundanzventileinheit 12. Genauer gesagt ist der Unterschied zwischen dem vierten Ausführungsbeispiel (Fig. 4) und dem dritten Ausführungsbeispiel (Fig. 3) der, dass kein Relaisventil 22 vorgesehen ist. Vielmehr ist die Redundanzdrucksteuerleitung 43 direkt an den ersten Wechselventilanschluss 20.1 angeschlossen, ohne Zwischenschaltung des Relaisventils. Das heißt, der Redundanzdruck PR wird unverstärkt an dem Wechselventil 20.1 ausgesteuert und dementsprechend auch unverstärkt an den dritten Wechselventilanschluss 20.3 weitergeleitet und unverstärkt als redundanter Bremsdruck PBR in die sechste Entlüftungsleitung 44 und in diesem Ausführungsbeispiel auch in die davon abzweigende achte Entlüftungsleitung 52 ausgesteuert. Diese Schaltungsanordnung ist dann bevorzugt, wenn der Redundanzdruck PR bereits ein ausreichendes Volumen hat, um direkt an Radbremsen weitergeleitet zu werden oder wenn der redundante Bremsdruck PBR, der in diesem Fall dann an den ersten und zweiten Achskanalanschlüssen 4, 24 ausgesteuert wird, an einem weiteren Modul, beispielsweise an den Radbremsen selbst, volumenverstärkt wird. In diesem Fall kann das elektropneumatische Bremssteuermodul einfacher ausgestaltet werden und vollständig ohne Relaisventil auskommen. Es wäre auch denkbar, den Redundanzdruck PR volumenzuverstärken, bevor er dem Redundanzdruckanschluss 6 zugeführt wird.

In allen Ausführungsbeispielen sind ferner Drucksensoren 54, 56 vorgesehen. Diese Drucksensoren 54, 56 sind optional und dienen dazu, den ersten Bremsdruck PB1, den zweiten Bremsdruck PB2 bzw. den redundanten Bremsdruck PBR zu erfassen. Insofern ist ein erster Drucksensor 54 über eine erste Druckmessleitung 55 mit der ersten Bremsdruckleitung 33 verbunden, um den ersten Bremsdruck PB1 bzw. im Fehlerfall den redundanten Bremsdruck PBR zu erfassen. Der erste Drucksensor 54 stellt dann ein entsprechendes Drucksignal SD1 an der elektronischen Steuereinheit ECU bereit, die dieses weiterverarbeiten kann, beispielsweise zur Druckregelung und in Abhängigkeit des bereitgestellten ersten Drucksignals SD1 die ersten und zweiten Schaltsignale S1, S2 ermitteln kann. Das erste Drucksignal SD1 kann auch über den elektrischen Anschluss 41 an einem Zentralmodul oder dergleichen bereitgestellt werden.

In gleicher Weise weist das elektropneumatische Bremssteuermodul 1 der zweiten, dritten und vierten Ausführungsbeispiele neben dem ersten Drucksensor 54 auch einen zweiten Drucksensor 56 auf, der über eine zweite Druckmessleitung 57 mit einer zweiten Bremsdruckleitung 58 verbunden ist, die den vierten Einlassventilanschluss 26.2 mit dem zweiten Achskanalanschluss 24 verbindet. Der zweite Drucksensor 56 stellt ein entsprechendes zweites Drucksignal SD2 an der elektronischen Steuereinheit ECU bereit, die dieses wiederum verwenden kann, um die dritten und vierten Schaltsignale S3, S4 zu ermitteln und/oder an ein Zentralmodul weiterzuleiten.

### Bezugszeichenliste (Bestandteil der Beschreibung)

- 1: Elektropneumatisches Bremssteuermodul
- 2: Vorratsanschluss
- 3: Druckluftvorrat
- 4: erster Achskanalanschluss
- 5: Entlüftung
- 6: Redundanzdruckanschuss
- 8: elektropneumatische Vorsteuereinheit
- 10: Einlass-Auslass-Ventileinheit
- 12: Redundanzventileinheit
- 14: erstes pneumatisch schaltbares 2/2-Wege-Einlassventil
- 14.1: erster Einlassventilanschluss
- 14.2: zweiter Einlassventilanschluss
- 14.3: erster Einlassventilsteueranschluss
- 16: erstes pneumatisch schaltbares 2/2-Wege-Auslassventil
- 16.1: erster Auslassventilanschluss
- 16.2: zweiter Auslassventilanschluss
- 16.3: erster Auslassventilsteueranschluss
- 17: erste Auslassleitung
- 18: Redundanzventil
- 18.1: erster Redundanzventilanschluss
- 18.2: zweiter Redundanzventilanschluss
- 18.3: dritter Redundanzventilanschluss
- 20: Wechselventil
- 20.1: erster Wechselventilanschluss
- 20.2: zweiter Wechselventilanschluss
- 20.3: dritter Wechselventilanschluss
- 21: Select-High-Ventil
- 22: Relaisventil
- 22.1: Relaisventil-Vorratsanschluss
- 22.2: Relaisventil-Entlüftungsanschluss
- 22.3: Relaisventil-Arbeitsanschluss
- 22.4: Relaisventil-Steueranschluss
- 24: zweiter Achskanalanschluss
- 26: zweites pneumatisch schaltbares 2/2-Wege-Einlassventil
- 26.1: dritter Einlassventilanschluss
- 26.2: vierter Einlassventilanschluss
- 26.3: zweiter Einlassventilsteueranschluss
- 28: zweites pneumatisch schaltbares 2/2-Wege-Auslassventil
- 28.1: dritter Auslassventilanschluss
- 28.1: vierter Auslassventilanschluss
- 28.3: zweiter Auslassventilsteueranschluss
- 29: zweite Auslassleitung
- 30: erste Vorratsdruckleitung
- 31: zweite Vorratsdruckleitung
- 32: dritte Vorratsdruckleitung
- 33: erste Bremsdruckleitung
- 34: erstes Vorsteuereinlassventil
- 34.1: erster Vorsteuereinlassventilanschluss
- 34.2: zweiter Vorsteuereinlassventilanschluss
- 34.3: dritter Vorsteuereinlassventilanschluss
- 35: vierte Vorratsdruckleitung
- 36: erstes Vorsteuerauslassventil
- 36.1: erster Vorsteuerauslassventilanschluss
- 36.2: zweiter Vorsteuerauslassventilanschluss
- 36.3: dritter Vorsteuerauslassventilanschluss
- 37: erste Steuerleitung
- 38: dritte Entlüftungsleitung
- 39: vierte Entlüftungsleitung
- 40: fünfte Entlüftungsleitung
- 41: elektrischer Anschluss
- 42: zweite Steuerleitung
- 43: Redundanzdrucksteuerleitung
- 44: sechste Entlüftungsleitung
- 46: zweites Vorsteuereinlassventil
- 46.1: vierter Vorsteuereinlassventilanschluss
- 46.2: fünfter Vorsteuereinlassventilanschluss
- 46.3: sechster Vorsteuereinlassventilanschluss
- 47: fünfte Vorratsdruckleitung
- 48: zweites Vorsteuerauslassventil
- 48.1: vierter Vorsteuerauslassventilanschluss
- 48.2: fünfter Vorsteuerauslassventilanschluss
- 48.3: sechster Vorsteuerauslassventilanschluss
- 49: dritte Steuerleitung
- 50: siebte Entlüftungsleitung
- 51: vierte Steuerleitung
- 52: achte Entlüftungsleitung
- 53: neunte Entlüftungsleitung
- 54: erster Drucksensor
- 55: erste Druckmessleitung
- 56: zweiter Drucksensor
- 57: zweite Druckmessleitung
- 58: zweite Bremsdruckleitung
- ECU: elektronische Steuereinheit
- P1: erster Steuerdruck
- P2: zweiter Steuerdruck
- P3: dritter Steuerdruck
- P4: vierter Steuerdruck
- PV: Vorratsdruck
- PR: Redundanzdruck
- PBR: redundanter Bremsdruck
- S1: erstes Schaltsignal
- S2: zweites Schaltsignal
- S3: drittes Schaltsignal
- S4: viertes Schaltsignal
- SB: Bremsanforderungssignal
- SD1: erstes Drucksignal
- SD2: zweites Drucksignal
- SR: Redundanzschaltsignal

## Patentansprüche

1. Elektropneumatisches Bremssteuermodul (1) für Nutzfahrzeuge (100), mit:
einem Vorratsanschluss (2) zum Anschließen eines Druckluftvorrats (3);
einem ersten Achskanalanschluss (4);
einer pneumatisch gesteuerten Einlass-Auslass-Ventileinheit (10) zum Aussteuern eines ersten Bremsdrucks (PB1) an dem ersten Achskanalanschluss (4);
einer elektropneumatischen Vorsteuereinheit (8) zum Aussteuern wenigstens eines ersten Steuerdrucks (P1) an der Einlass-Auslass-Ventileinheit (10),
wobei das elektropneumatische Bremssteuermodul (1) weist einen Redundanzdruckanschluss (6) zum Empfangen eines Redundanzdrucks (PR) und eine mit dem Redundanzdruckanschluss (6) verbundene Redundanzventileinheit (12) zum Aussteuern eines redundanten Bremsdrucks (PBR) an dem ersten Achskanalanschluss (4) für den Fall, dass die elektropneumatische Vorsteuereinheit (8) einen Fehler hat, auf,
**dadurch gekennzeichnet, dass** die Redundanzventileinheit (12) ein Redundanzventil (18) aufweist, mit einem mit dem Redundanzdruckanschluss (6) verbundenen ersten Redundanzventilanschluss (18.1), einem mit dem ersten Achskanalanschluss (4) verbindbaren zweiten Redundanzventilanschluss (18.2) und einen mit einer Entlüftung (5) verbundenen dritten Redundanzventilanschluss (18.3).

2. Elektropneumatisches Bremssteuermodul (1) nach Anspruch 1, wobei der erste Bremsdruck (PB1) von der Einlass-Auslass-Ventileinheit (10) von dem Vorratsanschluss (2) an den ersten Achskanalanschluss (4) direkt und unverstärkt durchsteuerbar ist.

3. Elektropneumatisches Bremssteuermodul (1) nach einem der vorstehenden Ansprüche, wobei die Redundanzventileinheit (12) mit der Einlass-Auslass-Ventileinheit (10) derart verbunden ist, dass der redundante Bremsdruck (PBR) über eine erste Auslassleitung (17) zur Entlüftung des ersten Achskanalanschlusses (4) an dem ersten Achskanalanschluss (4) im Fehlerfall der Vorsteuereinheit (8) aussteuerbar ist.

4. Elektropneumatisches Bremssteuermodul (1) nach einem der vorstehenden Ansprüche, wobei die Einlass-Auslass-Ventileinheit (10) ein erstes pneumatisch schaltbares 2/2-Wege-Einlassventil (14) und ein erstes pneumatisch schaltbares 2/2-Wege-Auslassventil (16) aufweist, wobei das erste pneumatisch schaltbare 2/2-Wege-Einlassventil (14) den ersten Steuerdruck (P1) und das erste pneumatisch schaltbare 2/2-Wege-Auslassventil (16) einen zweiten Steuerdruck (P2) von der Vorsteuereinheit (8) empfängt.

5. Elektropneumatisches Bremssteuermodul (1) nach Anspruch 4, wobei:
das erste pneumatisch schaltbare 2/2-Wege-Einlassventil (14) einen mit dem Vorratsanschluss (2) verbundenen ersten Einlassventilanschluss (14.1), einen mit dem ersten Achskanalanschluss (4) verbundenen zweiten Einlassventilanschluss (14.2) und einen ersten Einlassventilsteueranschluss (14.3) zum Empfangen des ersten Steuerdrucks (P1) aufweist; und
das erste pneumatisch schaltbare 2/2-Wege-Auslassventil (16) einen mit einer Entlüftung (5) verbundenen oder verbindbaren ersten Auslassventilanschluss (16.1), einen mit dem ersten Achskanalanschluss (4) verbundenen zweiten Auslassventilanschluss (16.2) und einen ersten Auslassventilsteueranschluss (16.3) zum Empfangen des zweiten Steuerdrucks (P2) aufweist.

6. Elektropneumatisches Bremssteuermodul (1) nach Anspruch 2, wobei die Redundanzventileinheit (12) ein Wechselventil (20) aufweist, und der redundante Bremsdruck (PBR) über das Wechselventil (20) in die erste Auslassleitung (17) einsteuerbar ist.

7. Elektropneumatisches Bremssteuermodul (1) nach Anspruch 2, wobei die Redundanzventileinheit (12) ein Relaisventil (22) zum Volumenverstärken des Redundanzdrucks (PR) aufweist.

8. Elektropneumatisches Bremssteuermodul (1) nach Anspruch 7, wobei das Relaisventil (22) einen mit dem Vorratsanschluss (2) verbundenen Relaisventil-Vorratsanschluss (22.1), einen mit einer Entlüftung (5) verbundenen Relaisventil-Entlüftungsanschluss (22.2), einen Relaisventil-Arbeitsanschluss (22.3) zum Aussteuern des redundanten Bremsdrucks (PBR) in die erste Auslassleitung (17), und einen mit dem Redundanzdruckanschluss (6) verbundenen oder verbindbaren Relaisventil-Steueranschluss (22.4) aufweist.

9. Elektropneumatisches Bremssteuermodul (1) nach Anspruch 5 und 8, wobei der Relaisventil-Arbeitsanschluss (22.3) mit dem ersten Auslassventilanschluss (16.1) verbunden ist.

10. Elektropneumatisches Bremssteuermodul (1) nach Anspruch 1 und 8, wobei der Relaisventil-Steueranschluss (22.4) mit dem zweiten Redundanzventilanschluss (18.2) verbunden ist.

11. Elektropneumatisches Bremssteuermodul (1) nach Anspruch 6, wobei das Wechselventil (20) einen mit dem Redundanzdruckanschluss (6) verbundenen oder verbindbaren ersten Wechselventilanschluss (20.1), einen mit einer Entlüftung (5) verbundenen zweiten Wechselventilanschluss (20.2) und einen mit der ersten Auslassleitung (17) verbundenen oder verbindbaren dritten Wechselventilanschluss (20.3) aufweist und wechselweise den dritten Wechselventilanschluss (20.3) mit entweder dem ersten Wechselventilanschluss (20.1) oder dem zweiten Wechselventilanschluss (20.2) verbindet.

12. Elektropneumatisches Bremssteuermodul (1) nach Anspruch 1 und 11, wobei der erste Wechselventilanschluss (20.1) mit dem zweiten Redundanzventilanschluss (18.2) verbunden ist.

13. Elektropneumatisches Bremssteuermodul (1) nach Anspruch 8 und 11, wobei der erste Wechselventilanschluss (20.1) mit dem Relaisventil-Arbeitsanschluss (22.3) verbunden ist.

14. Elektropneumatisches Bremssteuermodul (1) nach einem der vorstehenden Ansprüche, ferner aufweisend:
einen zweiten Achskanalanschluss (24);
wobei die Einlass-Auslass-Ventileinheit (10) dazu ausgebildet ist einen zweiten Bremsdruck (PB2) an dem zweiten Achskanalanschluss (24) auszusteuern;
wobei die elektropneumatische Vorsteuereinheit (8) dazu ausgebildet ist wenigstens einen dritten Steuerdruck (P3) an der Einlass-Auslass-Ventileinheit (10),
und wobei die Redundanzventileinheit (12) dazu ausgebildet ist den redundanten Bremsdruck (PBR) an dem zweiten Achskanalanschluss (24) für den Fall auszusteuern, dass die elektropneumatische Vorsteuereinheit (8) einen Fehler hat.

15. Elektropneumatisches Bremssteuermodul (1) nach Anspruch 14, wobei die Redundanzventileinheit (12) mit der Einlass-Auslass-Ventileinheit (10) derart verbunden ist, dass der redundante Bremsdruck (PBR) über eine zweite Auslassleitung (29) zur Entlüftung des zweiten Achskanalanschlusses (24) an dem zweiten Achskanalanschluss (24) im Fehlerfall der Vorsteuereinheit (8) aussteuerbar ist.

16. Elektropneumatisches Bremssteuermodul (1) nach Anspruch 14 oder 15, wobei die Einlass-Auslass-Ventileinheit (10) ein zweites pneumatisch schaltbares 2/2-Wege-Einlassventil (26) und ein zweites pneumatisch schaltbares 2/2-Wege-Auslassventil (28) für den zweiten Achskanalanschluss (24) aufweist, wobei das zweite pneumatisch schaltbare 2/2-Wege-Einlassventil (26) den dritten Steuerdruck (P3) und das zweite pneumatisch schaltbare 2/2-Wege-Auslassventil (28) einen vierten Steuerdruck (P4) von der Vorsteuereinheit (8) empfängt.

17. Elektropneumatisches Bremssteuermodul (1) nach einem der Ansprüche 14 bis 16, wobei:
das zweite pneumatisch schaltbare 2/2-Wege-Einlassventil (26) einen mit dem Vorratsanschluss (2) verbundenen dritten Einlassventilanschluss (26.1), einen mit dem zweiten Achskanalanschluss (24) verbundenen vierten Einlassventilanschluss (26.2) und einen zweiten Einlassventilsteueranschluss (26.3) zum Empfangen des dritten Steuerdrucks (P3) aufweist; und
das zweite pneumatisch schaltbare 2/2-Wege-Auslassventil (28) einen mit einer Entlüftung (3) verbundenen oder verbindbaren dritten Auslassventilanschluss (28.1), einen mit dem zweiten Achskanalanschluss (24) verbundenen vierten Auslassventilanschluss (28.2) und einen zweiten Auslassventilsteueranschluss (28.3) zum Empfangen des vierten Steuerdrucks (P4) aufweist.

18. Elektropneumatisches Bremssteuermodul (1) nach Anspruch 6 und einem der Ansprüche 14 bis 17, wobei der zweite Redundanzventilanschluss (18.2) auch mit dem zweiten Achskanalanschluss (24) verbindbar ist.

19. Elektropneumatisches Bremssteuermodul (1) nach Anspruch 1 und einem der Ansprüche 14 bis 18, wobei der redundante Bremsdruck (PBR) über das Wechselventil (20) in die zweite Auslassleitung (19) einsteuerbar ist.

20. Elektropneumatisches Bremssteuermodul (1) nach Anspruch 8 und einem der Ansprüche 14 bis 19, wobei der Relaisventil-Arbeitsanschluss (22.3) zum Aussteuern des redundanten Bremsdrucks (PBR) in die zweite Auslassleitung (19) ausgebildet ist.

21. Elektropneumatisches Bremssteuermodul (1) nach Anspruch 9 und einem der Ansprüche 14 bis 20, wobei der Relaisventil-Arbeitsanschluss (22.3) mit dem dritten Auslassventilanschluss (28.1) verbunden ist.

## Claims

1. Electropneumatic brake control module (1) for commercial vehicles (100), comprising:
a supply port (2) for connecting a compressed air supply (3) ;
a first axle channel port (4);
a pneumatically controlled inlet/outlet valve unit (10) for outputting a first braking pressure (PB1) at the first axle channel port (4);
an electropneumatic pilot control unit (8) for outputting at least a first control pressure (P1) at the inlet/outlet valve unit (10);
wherein the electropneumatic brake control module (1) has a redundancy pressure port (6) for receiving a redundancy pressure (PR) and a redundancy valve unit (12), connected to the redundancy pressure port (6), for outputting a redundant braking pressure (PBR) at the first axle channel port (4) in the event that the electropneumatic pilot control unit (8) has a fault,
**characterized in that** the redundancy valve unit (12) has a redundancy valve (18) with a first redundancy valve port (18.1) connected to the redundancy pressure port (6), a second redundancy valve port (18.2) connectable to the first axle channel port (4), and a third redundancy valve port (18.3) connected to a vent (5).

2. Electropneumatic brake control module (1) according to claim 1, wherein the first braking pressure (PB1) from the inlet/outlet valve unit (10) is directly fed from the supply port (2) to the first axle channel port (4) without boosting.

3. Electropneumatic brake control module (1) according to any one of the preceding claims, wherein the redundancy valve unit (12) is connected to the inlet/outlet valve unit (10) in such a way that, in the event that the pilot control unit (8) has a fault, the redundant braking pressure (PBR) can be output at the first axle channel port (4) via a first outlet line (17) for venting the first axle channel port (4).

4. Electropneumatic brake control module (1) according to any one of the preceding claims, wherein the inlet/outlet valve unit (10) has a first pneumatically switchable 2/2-way inlet valve (14) and a first pneumatically switchable 2/2-way outlet valve (16), wherein the first pneumatically switchable 2/2-way inlet valve (14) receives the first control pressure (P1) and the first pneumatically switchable 2/2-way outlet valve (16) receives a second control pressure (P2) from the pilot control unit (8).

5. Electropneumatic brake control module (1) according to claim 4, wherein:
the first pneumatically switchable 2/2-way inlet valve (14) has a first inlet valve port (14.1) connected to the supply port (2), a second inlet valve port (14.2) connected to the first axle channel port (4), and a first inlet valve control port (14.3) for receiving the first control pressure (P1) ; and
the first pneumatically switchable 2/2-way outlet valve (16) has a first outlet valve port (16.1) connected or connectable to a vent (5), a second outlet valve port (16.2) connected to the first axle channel port (4), and a first outlet valve control port (16.3) for receiving the second control pressure (P2).

6. Electropneumatic brake control module (1) according to claim 2, wherein the redundancy valve unit (12) has a shuttle valve (20), and the redundant braking pressure (PBR) can be introduced into the first outlet line (17) via the shuttle valve (20).

7. Electropneumatic brake control module (1) according to claim 2, wherein the redundancy valve unit (12) has a relay valve (22) for volume boosting of the redundancy pressure (PR).

8. Electropneumatic brake control module (1) according to claim 7, wherein the relay valve (22) has a relay valve supply port (22.1) connected to the supply port (2), a relay valve venting port (22.2) connected to a vent (5), a relay valve working port (22.3) for outputting the redundant braking pressure (PBR) into the first outlet line (17), and a relay valve control port (22.4) connected or connectable to the redundancy pressure port (6).

9. Electropneumatic brake control module (1) according to claims 5 and 8, wherein the relay valve working port (22.3) is connected to the first outlet valve port (16.1).

10. Electropneumatic brake control module (1) according to claims 1 and 8, wherein the relay valve control port (22.4) is connected to the second redundancy valve port (18.2).

11. Electropneumatic brake control module (1) according to claim 6, wherein the shuttle valve (20) has a first shuttle valve port (20.1) connected or connectable to the redundancy pressure port (6), a second shuttle valve port (20.2) connected to a vent (5), and a third shuttle valve port (20.3) connected or connectable to the first outlet line (17), and selectively connects the third shuttle valve port (20.3) to either the first shuttle valve port (20.1) or the second shuttle valve port (20.2).

12. Electropneumatic brake control module (1) according to claims 1 and 11, wherein the first shuttle valve port (20.1) is connected to the second redundancy valve port +(18.2) .

13. Electropneumatic brake control module (1) according to claims 8 and 11, wherein the first shuttle valve port (20.1) is connected to the relay valve working port (22.3).

14. Electropneumatic brake control module (1) according to any one of the preceding claims, further comprising:
a second axle channel port (24);
wherein the inlet/outlet valve unit (10) is configured to output a second braking pressure (PB2) at the second axle channel port (24);
wherein the electropneumatic pilot control unit (8) is configured to output at least a third control pressure (P3) at the inlet/outlet valve unit (10);
and wherein the redundancy valve unit (12) is configured to output the redundant braking pressure (PBR) at the second axle channel port (24) in the event that the electropneumatic pilot control unit (8) has a fault.

15. Electropneumatic brake control module (1) according to claim 14, wherein the redundancy valve unit (12) is connected to the inlet/outlet valve unit (10) in such a way that, in the event that the pilot control unit (8) has a fault, the redundant braking pressure (PBR) can be output at the second axle channel port (24) via a second outlet line (29) for venting the second axle channel port (24).

16. Electropneumatic brake control module (1) according to claim 14 or 15, wherein the inlet/outlet valve unit (10) has a second pneumatically switchable 2/2-way inlet valve (26) and a second pneumatically switchable 2/2-way outlet valve (28) for the second axle channel port (24), wherein the second pneumatically switchable 2/2-way inlet valve (26) receives the third control pressure (P3) and the second pneumatically switchable 2/2-way outlet valve (28) receives a fourth control pressure (P4) from the pilot control unit (8).

17. Electropneumatic brake control module (1) according to any one of claims 14 to 16, wherein:
the second pneumatically switchable 2/2-way inlet valve (26) has a third inlet valve port (26.1) connected to the supply port (2), a fourth inlet valve port (26.2) connected to the second axle channel port (24), and a second inlet valve control port (26.3) for receiving the third control pressure P3) ; and
the second pneumatically switchable 2/2-way outlet valve (28) has a third outlet valve port (28.1) connected or connectable to a vent (3), a fourth outlet valve port (28.2) connected to the second axle channel port (24), and a second outlet valve control port (28.3) for receiving the fourth control pressure (P4).

18. Electropneumatic brake control module (1) according to claim 6 and any one of claims 14 to 17, wherein the second redundancy valve port (18.2) is also connectable to the second axle channel port (24).

19. Electropneumatic brake control module (1) according to claim 1 and any one of claims 14 to 18, wherein the redundant braking pressure (PBR) can be introduced into the second outlet line (19) via the shuttle valve (20).

20. Electropneumatic brake control module (1) according to claim 8 and any one of claims 14 to 19, wherein the relay valve working port (22.3) is configured to output the redundant braking pressure (PBR) into the second outlet line (19) .

21. Electropneumatic brake control module (1) according to claim 9 and any one of claims 14 to 20, wherein the relay valve working port (22.3) is connected to the third outlet valve port (28.1).

## Revendications

1. Module de commande de freinage électropneumatique (1) pour véhicules utilitaires (100), avec :
un raccord de réserve (2) pour le raccordement d'une réserve d'air comprimé (3) ;
un premier raccord de canal d'essieu (4) ;
une unité de soupape d'entrée-de sortie (10) à commande pneumatique pour la modulation d'une première pression de freinage (PB1) sur le premier raccord de canal d'essieu (4) ;
une unité pilote électropneumatique (8) pour la modulation d'au moins une première pression de commande (P1) sur l'unité de soupape d'entrée-de sortie (10),
dans lequel le module de commande de freinage électropneumatique (1) a un raccord de pression de redondance (6) pour la réception d'une pression de redondance (PR) et une unité de soupape de redondance (12) reliée au raccord de pression de redondance (6) pour la modulation d'une pression de freinage redondante (PBR) sur le premier raccord de canal d'essieu (4) au cas où l'unité pilote électropneumatique (8) présenterait un défaut,
**caractérisé en ce que**
l'unité de soupape de redondance (12) présente une soupape de redondance (18), avec un premier raccord de soupape de redondance (18.1) relié au raccord de pression de redondance (6), un deuxième raccord de soupape de redondance (18.2) pouvant être relié au premier raccord de canal d'essieu (4) et un troisième raccord de soupape de redondance (18.3) relié à une aération (5).

2. Module de commande de freinage électropneumatique (1) selon la revendication 1, dans lequel
la première pression de freinage (PB1) peut être commandée par l'unité de soupape d'entrée-de sortie (10) de manière directe et non amplifiée à partir du raccord de réserve (2) sur le premier raccord de canal d'essieu (4).

3. Module de commande de freinage électropneumatique (1) selon l'une quelconque des revendications précédentes, dans lequel l'unité de soupape de redondance (12) est reliée à l'unité de soupape d'entrée-de sortie (10), de telle sorte que la pression de freinage redondante (PBR) peut être modulée sur le premier raccord de canal d'essieu (4) en cas de panne de l'unité pilote (8) par l'intermédiaire d'une première conduite de sortie (17) pour l'aération du premier raccord de canal d'essieu (4).

4. Module de commande de freinage électropneumatique (1) selon l'une quelconque des revendications précédentes, dans lequel l'unité de soupape d'entrée-de sortie (10) présente une première soupape d'entrée à 2/2 voies à commutation pneumatique (14) et une première soupape de sortie à 2/2 voies à commutation pneumatique (16), dans lequel la première soupape d'entrée à 2/2 voies à commutation pneumatique (14) reçoit de l'unité pilote (8) la première pression de commande (P1) et la première soupape de sortie à 2/2 voies à commutation pneumatique (16) une deuxième pression de commande (P2).

5. Module de commande de freinage électropneumatique (1) selon la revendication 4, dans lequel :
la première soupape d'entrée à 2/2 voies à commutation pneumatique (14) présente un premier raccord de soupape d'entrée (14.1) relié au raccord de réserve (2), un deuxième raccord de soupape d'entrée (14.2) relié au premier raccord de canal d'essieu (4) et un premier raccord de commande de soupape d'entrée (14.3) pour la réception de la première pression de commande (P1) ; et
la première soupape de sortie à 2/2 voies à commutation pneumatique (16) présente un premier raccord de soupape de sortie (16.1) relié ou pouvant être relié à une aération (5), un deuxième raccord de soupape de sortie (16.2) relié au premier raccord de canal d'essieu (4) et un premier raccord de commande de soupape de sortie (16.3) pour la réception de la deuxième pression de commande (P2).

6. Module de commande de freinage électropneumatique (1) selon la revendication 2, dans lequel l'unité de soupape de redondance (12) présente une soupape navette (20), et la pression de freinage redondante (PBR) peut être injectée dans la première conduite de sortie (17) par l'intermédiaire de la soupape navette (20).

7. Module de commande de freinage électropneumatique (1) selon la revendication 2, dans lequel l'unité de soupape de redondance (12) présente une soupape relais (22) pour amplifier le volume de la pression de redondance (PR).

8. Module de commande de freinage électropneumatique (1) selon la revendication 7, dans lequel la soupape relais (22) présente un raccord de réserve de soupape relais (22.1) relié au raccord de réserve (2), un raccord d'aération de soupape relais (22.2) relié à une aération (5), un raccord de travail de soupape relais (22.3) pour la modulation de la pression de freinage redondante (PBR) dans la première conduite de sortie (17), et un raccord de commande de soupape relais (22.4) relié ou pouvant être relié au raccord de pression de redondance (6).

9. Module de commande de freinage électropneumatique (1) selon la revendication 5 et 8, dans lequel le raccord de travail de soupape relais (22.3) est relié au premier raccord de soupape de sortie (16.1).

10. Module de commande de freinage électropneumatique (1) selon la revendication 1 et 8, dans lequel le raccord de commande de soupape relais (22.4) est relié au deuxième raccord de soupape de redondance (18.2).

11. Module de commande de freinage électropneumatique (1) selon la revendication 6, dans lequel la soupape navette (20) présente un premier raccord de soupape navette (20.1) relié ou pouvant être relié au raccord de pression de redondance (6), un deuxième raccord de soupape navette (20.2) relié à une aération (5) et un troisième raccord de soupape navette (20.3) relié ou pouvant être relié à la première conduite de sortie (17) et alternativement relie le troisième raccord de soupape navette (20.3) à soit le premier raccord de soupape navette (20.1) soit le deuxième raccord de soupape navette (20.2).

12. Module de commande de freinage électropneumatique (1) selon la revendication 1 et 11, dans lequel le premier raccord de soupape navette (20.1) est relié au deuxième raccord de soupape de redondance (18.2).

13. Module de commande de freinage électropneumatique (1) selon la revendication 8 et 11, dans lequel le premier raccord de soupape navette (20.1) est relié au raccord de travail de soupape relais (22.3).

14. Module de commande de freinage électropneumatique (1) selon l'une quelconque des revendications précédentes, présentant en outre :
un deuxième raccord de canal d'essieu (24) ;
dans lequel l'unité de soupape d'entrée-de sortie (10) est réalisée pour moduler une deuxième pression de freinage (PB2) sur le deuxième raccord de canal d'essieu (24) ;
dans lequel l'unité pilote électropneumatique (8) est réalisée au moins une troisième pression de commande (P3) sur l'unité de soupape d'entrée-de sortie (10),
et dans lequel l'unité de soupape de redondance (12) est réalisée pour moduler la pression de freinage redondante (PBR) sur le deuxième raccord de canal d'essieu (24) au cas où l'unité pilote électropneumatique (8) présenterait un défaut.

15. Module de commande de freinage électropneumatique (1) selon la revendication 14, dans lequel l'unité de soupape de redondance (12) est reliée à l'unité de soupape d'entrée-de sortie (10), de telle sorte que la pression de freinage redondante (PBR) peut être modulée sur le deuxième raccord de canal d'essieu (24) en cas de panne de l'unité pilote (8) par l'intermédiaire d'une deuxième conduite de sortie (29) pour l'aération du deuxième raccord de canal d'essieu (24).

16. Module de commande de freinage électropneumatique (1) selon la revendication 14 ou 15, dans lequel l'unité de soupape d'entrée-de sortie (10) présente une deuxième soupape d'entrée à 2/2 voies à commutation pneumatique (26) et une deuxième soupape de sortie à 2/2 voies à commutation pneumatique (28) pour le deuxième raccord de canal d'essieu (24), dans lequel la deuxième soupape d'entrée à 2/2 voies à commutation pneumatique (26) reçoit de l'unité pilote (8) la troisième pression de commande (P3) et la deuxième soupape de sortie à 2/2 voies à commutation pneumatique (28) une quatrième pression de commande (P4).

17. Module de commande de freinage électropneumatique (1) selon l'une quelconque des revendications 14 à 16, dans lequel :
la deuxième soupape d'entrée à 2/2 voies à commutation pneumatique (26) présente un troisième raccord de soupape d'entrée (26.1) relié au raccord de réserve (2), un quatrième raccord de soupape d'entrée (26.2) relié au deuxième raccord de canal d'essieu (24) et un deuxième raccord de commande de soupape d'entrée (26.3) pour la réception de la troisième pression de commande (P3) ; et
la deuxième soupape de sortie à 2/2 voies à commutation pneumatique (28) présente un troisième raccord de soupape de sortie (28.1) relié ou pouvant être relié à une aération (3), un quatrième raccord de soupape de sortie (28.2) relié au deuxième raccord de canal d'essieu (24) et un deuxième raccord de commande de soupape de sortie (28.3) pour la réception de la quatrième pression de commande (P4).

18. Module de commande de freinage électropneumatique (1) selon la revendication 6 et l'une quelconque des revendications 14 à 17, dans lequel le deuxième raccord de soupape de redondance (18.2) peut également être relié au deuxième raccord de canal d'essieu (24).

19. Module de commande de freinage électropneumatique (1) selon la revendication 1 et l'une quelconque des revendications 14 à 18, dans lequel la pression de freinage redondante (PBR) peut être injectée dans la deuxième conduite de sortie (19) par l'intermédiaire de la soupape navette (20).

20. Module de commande de freinage électropneumatique (1) selon la revendication 8 et l'une quelconque des revendications 14 à 19, dans lequel le raccord de travail de soupape relais (22.3) est réalisé pour la modulation de la pression de freinage redondante (PBR) dans la deuxième conduite de sortie (19).

21. Module de commande de freinage électropneumatique (1) selon la revendication 9 et l'une quelconque des revendications 14 à 20, dans lequel le raccord de travail de soupape relais (22.3) est relié au troisième raccord de soupape de sortie (28.1).
